(19) Europäisches Patentamt
European Patent Office
Office européen des brevets

(11) **EP 3 682 066 B1**

(12) **EUROPÄISCHE PATENTSCHRIFT**

(45) Veröffentlichungstag und Bekanntmachung des Hinweises auf die Patenterteilung:
**28.07.2021  Patentblatt 2021/30**

(21) Anmeldenummer: **18779779.0**

(22) Anmeldetag: **12.09.2018**

(51) Int Cl.:
*E04B 1/80* (2006.01)    *B32B 7/04* (2019.01)
*B32B 7/12* (2006.01)    *B32B 15/08* (2006.01)
*B32B 27/08* (2006.01)    *B32B 3/12* (2006.01)
*B32B 3/28* (2006.01)    *B32B 27/30* (2006.01)
*B32B 27/32* (2006.01)    *B32B 27/36* (2006.01)
*B29C 51/08* (2006.01)    *E04C 2/34* (2006.01)
*E04B 1/74* (2006.01)    *E04B 1/76* (2006.01)
*E04C 2/32* (2006.01)

(86) Internationale Anmeldenummer:
**PCT/IB2018/056953**

(87) Internationale Veröffentlichungsnummer:
**WO 2019/053601 (21.03.2019 Gazette 2019/12)**

(54) **THERMISCHES ISOLATIONSELEMENT**

THERMAL INSULATING ELEMENT

ÉLÉMENT D'ISOLATION THERMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.09.2017   AT 3612017**

(43) Veröffentlichungstag der Anmeldung:
**22.07.2020   Patentblatt 2020/30**

(73) Patentinhaber: **REP IP AG**
**6302 Zug (CH)**

(72) Erfinder: **ROS, Nico**
**4125 Riehen (CH)**

(74) Vertreter: **Keschmann, Marc**
**Haffner und Keschmann Patentanwälte GmbH**
**Schottengasse 3a**
**1010 Wien (AT)**

(56) Entgegenhaltungen:
**EP-A1- 0 250 005       WO-A1-2007/010868**
**WO-A1-2011/032299     WO-A1-2012/142639**
**WO-A1-2016/085220     US-A- 2 856 323**

**Beschreibung**

Die Erfindung betrifft ein Isolationselement zur thermischen Isolation von Räumen umfassend eine Mehrzahl von geschlossenen Zellen, wobei eine erste Gruppe von geschlossenen Zellen von ersten Vertiefungen in einem ersten flächigen Element gebildet ist und das erste flächige Element zwischen den Rändern der Öffnungen benachbarter Vertiefungen erste Verbindungsbereiche ausbildet, mit welchen ein erstes, die Öffnungen einer Vielzahl von ersten Vertiefungen verschließendes flächiges Deckelement an einer Vorderseite des ersten flächigen Elements stoffschlüssig verbunden ist.

Weiters betrifft die Erfindung ein Verfahren zur Herstellung eines solchen Isolationselements.

Im Baugewerbe sind effiziente und günstige Isolationsmaßnahmen gefragt. Man ist danach bestrebt, mit einer möglichst dünnen Isolationsschicht einen hohen Wärme- und Kälteschutz zu erzeugen und das zu möglichst tiefen Kosten. Das Ziel jeder Isolation ist, die drei Mechanismen der Wärmeübertragungen, nämlich Konduktion, Konvektion und Strahlung zu minimieren. Herkömmliche Isolationen verwenden dazu ein Kernmaterial, das Wärme schlecht leitet. Zusätzlich wird versucht mit geeigneten Beschichtungen des Kernmaterials den Wärmeeintrag durch Strahlung zu minimieren. Als Kernmaterial mit tiefem Wärmeleitkoeffizienten werden Schäume auf der Basis von Polystyrol oder Polyurethan eingesetzt. Diese Dämmstoffe erreichen Wärmeleitkoeffizienten von bis zu 22mW/mK und sind im Vergleich zu Hochleistungsdämmstoffen (< 20mW/mK) günstig. Weiters lassen sich Dämmstoffe aus Polyurethan gut bearbeiten und einfach einsetzen. Jedoch können sie weder aus Recyclingmaterialen hergestellt werden noch können diese aufgrund der zum Einsatz kommenden Duroplaste recycelt werden. Im Vergleich zu anderen Isolationen nehmen Dämmstoffe aus geschäumtem Polystyrol oder Polyurethan außerdem wesentlich mehr Platz ein, was zum Teil ein Ausschlusskriterium darstellt.

Daneben gibt es verschiedene Hochleistungsisolationen, die versuchen, den Wärmeleitkoeffizienten zu minimieren, um Platz zu sparen. Dazu gehören z.B. Vakuumpaneele und Aerogels. Die Vorteile solcher Isolationen liegen in den tiefen Wärmeleitkoeffizient von bis zu 5mW/mK. VakuumPaneele bieten einen sehr guten Schutz gegen Wärmeleitung, der große Nachteil solcher Isolationen sind allerdings die hohen Kosten und die schlechte Bearbeitbarkeit. Vakuumpaneele weisen durch die hochdichten Folien an den Stößen außerdem Schwachstellen auf, die den Gesamtwert der Isolationswirkung verschlechtern. Ein weiteres Problem ist ihre Lebensdauer. Ebenso besteht bei Vakuumpaneelen das Risiko, dass durch einen kleinen Schnitt das Vakuum in einem ganzen Paneel verloren geht. Dadurch verschlechtert sich der Dämmwert sofort um ein Vielfaches. Nebst den Nachteilen in der Verarbeitung und des Beschädigungsrisikos sind Vakuumpaneele verhältnismäßig teuer.

Aerogels sind im Vergleich zu Vakuumpaneelen um einiges besser verarbeitbar. Jedoch ist der Dämmwert mit ca. 17mW/mK wesentlich schlechter als jener von Vakuumpaneelen. Neben dem schlechteren Dämmwert liegt der Hauptnachteil von Aerogels in den sehr hohen Produktionskosten.

Paneelartige Isolationselemente mit einer Vielzahl von geschlossenen Zellen in Form eines Wabenstrukturelements sind aus der WO 2011/032299 A1 und der WO 2012/142639 A1 bekannt geworden. Vorteilhaft ist hierbei, dass das Wabenstrukturelement kostengünstig aus Polymerfolien hergestellt werden kann, wobei Vertiefungen in den Polymerfolien durch Tiefziehen erhalten und die Vertiefungen durch Aufbringen einer weiteren Polymerfolie geschlossen werden können. Die von den geschlossenen Vertiefungen gebildeten Zellen können mit einem Gas gefüllt werden, das einen geringen Wärmeleitkoeffizienten aufweist. Weiters kann die Wärmeübertragung durch Aufbringen einer reflektierenden Metallschicht mit geringem Emissionsgrad reduziert werden. Das genannte Isolationselement bietet zwar vertretbare Isolationseigenschaften, jedoch ist der Ausnutzungsgrad bezüglich der Gasfüllung der Zellen aufgrund der Formgebung gering, sodass nur ein Teil des Volumens des Isolationselements mit einem Gas gefüllt werden kann, das einen geringen Wärmeleitkoeffizienten aufweist. Zudem ist eine beidseitige Metall-Beschichtung notwendig.

Die vorliegende Erfindung zielt daher darauf ab, ein Isolationselement mit einer Vielzahl von geschlossenen Zellen dahingehend zu verbessern, dass die Isolationseigenschaften verbessert und die Herstellung vereinfacht und kostengünstig gestaltet werden kann, wobei eine Herstellung aus recycelten Materialen gelingen soll. Weiters sollen möglichst alle drei Mechanismen der Wärmeübertragung berücksichtigt werden und somit die Wärmeübertragung durch Konduktion, Konvektion und Strahlung verringert werden.

Zur Lösung dieser Aufgabe sieht die Erfindung bei einem Isolationselement der eingangs genannten Art mit den Merkmalen des Anspruchs 1 vor.

Es sind somit zumindest eine erste und eine zweite Gruppe von Zellen vorgesehen, die von Vertiefungen in einem ersten bzw. zweiten flächigen Element gebildet sind, sodass die Herstellung in einfacher und kostengünstiger Weise ausgehend von einem flächigen, insbesondere planaren bzw. ebenflächigen Element, wie z.B. einer Folie erfolgen kann. Jede geschlossene Zelle wird hierbei durch eine entsprechende Vertiefung gebildet, die von dem flächigen Deckelement verschlossen ist. Zur Herstellung einer geschlossenen Zelle bedarf es somit lediglich einer Vertiefung in dem ersten bzw. zweiten flächigen Element und eines zugehörigen flächigen Deckelements, mit welchem die Vertiefung verschlossen ist. Da die Zellen der ersten Gruppe und die Zellen der zweiten Gruppe unabhängig voneinander gebildet sind, können die Zellen der ersten Gruppe und die Zellen der zweiten Gruppe gesondert voneinander hergestellt werden, was insbesondere den Vorteil mit sich bringt, dass eine allfällige Befüllung der Zellen mit einem Gas im Zuge der gesonderten Herstellung wesentlich einfacher zu bewerkstelligen ist.

Der Zusammenbau des die erste Gruppe von Zellen und des die zweite Gruppe von Zellen enthaltenden Elements erfolgt konstruktionsbedingt in einem gesonderten Schritt, d.h. nach der Herstellung der geschlossenen Zellen, wobei die gegenseitige Anordnung der ersten und zweiten Vertiefungen hierbei derart erfolgt, dass die flächigen Elemente mit ihrer Rückseite zueinander weisen, sodass die ersten Vertiefungen zwischen den zweiten Vertiefungen und umgekehrt angeordnet sind. Als Rückseite wird hierbei jene Seite des ersten bzw. zweiten flächigen Elements bezeichnet, welche der Vorderseite gegenüberliegt. Die Vorderseite ist diejenige Seite des flächigen Elements, auf der die ursprünglich offenen Vertiefungen mit Hilfe des flächigen Deckelements verschlossen sind. Die Rückseite ist diejenige Seite des flächigen Elements, auf der die Vertiefungen aus der Ebene des flächigen Elements hervorstehen.

Die Formgebung der ersten und zweiten Vertiefungen ist hierbei so gestaltet, dass die geschlossenen Zellen der ersten Gruppe und die geschlossenen Zellen der zweiten Gruppe einen möglichst großen Anteil des zwischen den flächigen Elementen vorhandenen Volumens einnehmen bzw. ein möglichst geringer Anteil dieses Volumens freibleibt. Wenn das erste und das zweite flächige Element parallel zueinander angeordnet sind, kann das zwischen den flächigen Elementen vorhandene Volumen durch Multiplikation der Flächenerstreckung des ersten bzw. zweiten flächigen Elements (wenn diese Flächen einander nicht exakt überdecken, wird lediglich die überlappende Fläche herangezogen) mit dem Normalabstand zwischen dem ersten und dem zweiten flächigen Element erhalten werden.

Es ist hierbei vorgesehen, dass das zwischen dem ersten und dem zweiten flächigen Element von ersten und zweiten Vertiefungen freibleibende Volumen weniger als 50%, bevorzugt weniger als 40%, bevorzugt weniger als 30%, bevorzugt weniger als 20%, bevorzugt weniger als 10%, insbesondere weniger als 5%, des Volumens beträgt, das die ersten und zweiten Vertiefungen zusammen einschließen. Dies hat den Effekt, dass der Anteil des mit einem einen geringen Wärmeleitkoeffizienten aufweisenden Gas befüllbaren Volumens maximiert wird, sodass die Isolationswirkung optimiert werden kann. Bei der Ausbildung mit wabenförmigen Zellen gemäß der WO 2011/032299 A1 und der WO 2012/142639 A1 hingegen ist wenigstens 1/3 des Gesamtvolumens von Zellen eingenommen, die nicht vorfabriziert und daher nur schwer mit einem Gas befüllbar sind.

Die Produktion des erfindungsgemäßen Isolationselements kann besonders kostengünstig erfolgen, wenn, wie dies einer bevorzugten Ausbildung entspricht, das erste und/oder zweite flächige Element sowie ggf.

das erste und/oder zweite flächige Deckelement von einer Polymerfolie gebildet ist, vorzugsweise aus Polyethylen, Polyethylenterephthalat, Polystyrol oder PVC, wobei die Folie bevorzugt eine Dicke von 0,01mm bis 1mm aufweist. Geeignete Polymerfolien sind günstig erhältlich und können auch aus Recyclingmaterial gewonnen werden.

Gemäß einer bevorzugten Ausführung ist vorgesehen, dass die ersten und/oder zweiten Vertiefungen aus dem ersten flächigen Element bzw. aus dem ersten flächigen Deckelement durch Tiefziehen erhalten sind.

Im Hinblick auf die Ausgestaltung der Vertiefungen kann vorgesehen sein, dass die zweiten Vertiefungen jeweils eine Grundfläche, eine Öffnung und die Grundfläche mit dem Rand der Öffnung verbindende Wände aufweisen, wobei die zweiten Vertiefungen so an einer Rückseite des ersten flächigen Elements angeordnet sind, dass die Grundflächen der zweiten Vertiefungen in den ersten Verbindungsbereichen an diesen anliegen. Im anliegenden Bereich kann eine stoffschlüssige Verbindung z.B. mittels Kleben oder Schweißen, insbesondere Ultraschallschweißen, erfolgen.

Eine Optimierung der Isolationswirkung kann hierbei dadurch erreicht werden, dass der Anteil des ersten flächigen Elements in den ersten Verbindungsbereichen, der nicht an eine geschlossene Zelle angrenzt minimiert wird. Zu diesem Zweck ist bevorzugt vorgesehen, dass die Summe der Grundflächen der zweiten Vertiefungen mindestens 70%, bevorzugt mindestens 80%, bevorzugt mindestens 90%, insbesondere mindestens 95%, der Summe der Flächen der ersten Verbindungsbereiche entspricht.

In Bezug auf die ersten Vertiefungen ist bevorzugt vorgesehen, dass diese jeweils eine Grundfläche, eine Öffnung und die Grundfläche mit dem Rand der Öffnung verbindende Wände aufweisen, wobei die ersten Vertiefungen so an einer Rückseite des zweiten flächigen Elements angeordnet sind, dass die Grundflächen der ersten Vertiefungen in den zweiten Verbindungsbereichen an diesen anliegen. Im anliegenden Bereich kann eine stoffschlüssige Verbindung zwischen, z.B. mittels Kleben oder Schweißen, insbesondere Ultraschallschweißen, erfolgen.

Die Summe der Grundflächen der ersten Vertiefungen entspricht vorzugsweise mindestens 70%, bevorzugt mindestens 80%, bevorzugt mindestens 90%, insbesondere mindestens 95%, der Summe der Flächen der zweiten Verbindungsbereiche.

Gemäß einer bevorzugten Ausbildung ist unter den ersten Verbindungsbereichen die gesamte, von ersten Vertiefungen freie Fläche des ersten flächigen Elements zu verstehen und unter den zweiten Verbindungsbereichen ist die gesamte, von zweiten Vertiefungen freie Fläche des zweiten flächigen Elements zu verstehen.

Um den von geschlossenen Zellen freien Anteil des Volumens zu minimieren, ist bevorzugt vorgesehen, dass die Wände der ersten Vertiefungen und die Wände der zweiten Vertiefungen parallel zueinander angeordnet sind oder flächig aneinander liegen.

Das erfindungsgemäße Isolationselement ist als selbsttragendes, steifes Paneel ausgebildet, das z.B. für Bauzwecke zur Begrenzung von Räumen eingesetzt werden kann. Eine quaderartige Formgebung des Isolationselements wird hierbei bevorzugt dadurch erreicht, dass das erste und das zweite flächige Deckelement parallel zueinander verlaufen und insbesondere ebenflächig ausgebildet sind. In diesem Fall verlaufen die Grundfläche der ersten und/oder zweiten Vertiefungen vorzugsweise parallel zu der Ebene des zugehörigen flächigen Elements.

Die ersten und/oder zweiten Vertiefunger sind in einem Raster bestehend aus einer Mehrzahl von Reihen und Spalten von Vertiefungen angeordnet, wobei die Reihen und Spalten quer zueinander, insbesondere in einem Winkel von 90°, verlaufen. Eine platzsparende Anordnung ergibt sich dabei bevorzugt dadurch, dass die Öffnungen der ersten und/oder zweiten Vertiefungen rechteckig, insbesondere quadratisch ausgebildet sind.

In dieser Anordnung der Vertiefungen in einem Raster ergeben sich zwischen den Vertiefungen streifenartige Verbindungsbereiche, insbesondere ein Gitter aus quer, insbesondere in einem Winkel von 90°, zueinander verlaufen streifenartigen Verbindungsbereichen.

Der gitterartigen Geometrie der Verbindungsbereiche folgend sieht eine optimierte Formgebung der Vertiefungen vor, dass die Grundfläche der ersten und/oder zweiten Vertiefungen kreuzförmig ausgebildet ist und die ersten Vertiefungen so angeordnet sind, dass die kreuzförmige Grundfläche mit ihrem Schnittpunkt am Schnittpunkt von zwei streifenartigen Verbindungsbereichen aufliegt.

Dies ermöglicht eine Ausbildung, bei der die ersten und die zweiten Vertiefungen die gleiche dreidimensionale Gestalt aufweisen, wodurch die Herstellung besonders vereinfacht wird.

Eine vorteilhafte Ausführung sieht hierbei vor, dass die Rückseite einer Mehrzahl von ersten Vertiefungen eine Negativform für wenigstens eine zweite Vertiefung darstellt. Dadurch passen die zweiten Vertiefungen exakt zwischen die ersten Vertiefungen und es verbleibt allenfalls ein sehr kleiner Anteil des Gesamtvolumens, der von geschlossenen Zellen frei ist.

In vorteilhafter Weise, insbesondere im Hinblick auf eine Maximierung des Weges, den die eingebrachte Wärmeenergie durch Wärmeleitung zurücklegen muss, verlaufen die Wände der ersten und/oder zweiten Vertiefungen von der kreuzförmigen Grundfläche ausgehend schräg jeweils zum nähesten Rand.

Die Wärmeleitung kann wie bereits erwähnt auch dadurch minimiert werden, dass die Zellen mit einem Gas, vorzugsweise einem solchen mit einem Wärmeleitkoeffizienten von < 0,026W/mK, bevorzugt < 0,017W/mK, bevorzugt < 0,009W/mK, bevorzugt < 0,0055W/mK, wie z.B. $CO_2$, Stickstoff oder ein Edelgas, insbesondere Argon, Xenon, Krypton oder Mischungen hiervon, gefüllt sind.

Wenn nun, wie dies einer bevorzugten Weiterbildung der Erfindung entspricht, das Gas in den bzw. den Zellen unter unteratmosphärischem Druck, insbesondere unter einem Druck von 100 - 700 mbar steht, können durch die Herabsetzung des Gasdrucks die Kosten der Edelgasfüllung auf einen Bruchteil reduziert werden, so dass ein Isolationsmaterial mit Edelgasfüllung im Bauwesen oder für andere Zwecke bezahlbar wird. In einem Druckbereich, in dem jede Vakuumisolation ihre Wirksamkeit verliert, bleibt hingegen die Wirksamkeit der Edelgasisolation mit Unterdruck erhalten, so dass diese trotz einströmender Luft eine wesentlich längere Lebensdauer aufweist.

Bevorzugt ist hierbei vorgesehen, dass die Zellen im Wesentlichen gasdicht ausgebildet sind.

Die Wärmedämmung kann bevorzugt auch dadurch verbessert werden, dass die Zellen mit einem Latentwärmespeicher gefüllt sind. Ein Latentwärmespeicher ist eine Einrichtung, die thermische Energie verborgen, verlustarm, mit vielen Wiederholzyklen und über lange Zeit speichern kann. Man nutzt dazu sogenannte phase change materials (PCM, "Phasenwechselmaterialien"), deren latente Schmelzwärme, Lösungswärme oder Absorptionswärme wesentlich größer ist als die Wärme, die sie aufgrund ihrer normalen spezifischen Wärmekapazität (ohne den Phasenumwandlungseffekt) speichern können. Latentwärmespeicher funktionieren durch die Ausnutzung der Enthalpie reversibler thermodynamischer Zustandsänderungen eines Speichermediums, wie z.B. des Phasenübergangs fest-flüssig. Die Ausnutzung des Phasenübergangs fest-flüssig ist dabei das am häufigsten genutzte Prinzip.

Um die Wärmeübertragung durch Wärmestrahlung zu minimieren, ist bevorzugt vorgesehen, dass das erste und/oder zweite flächige Element sowie ggf. das erste und/oder zweite flächige Deckelement auf wenigstens einer Seite eine Beschichtung aufweist, bevorzugt eine metallische, insbesondere gasdichte Beschichtung, vorzugsweise eine Beschichtung mit einem Emissionsgrad von < 0,5, vorzugsweise < 0,2, besonders bevorzugt < 0,04, wie z.B. eine Beschichtung aus Aluminium.

Hierbei ist es ausreichend, wenn die Beschichtung an der Innenseite der Zellen angeordnet ist.

Gemäß einer bevorzugten Ausbildung weist die Beschichtung eine Schichtdicke von < 80 nm, vorzugsweise < 50 nm, auf. Auf Grund der geringen Schichtdicke gelingt es, den Vorteil der geringen Wärmeleitfähigkeit z.B. von Polymeren des flächigen Elements mit gasdichten Metallschichten im Nanometerbereich so zu verbinden, dass das Isolationsmaterial Wärmestrahlen erheblich reflektiert und bevorzugt zugleich gasdicht verschlossen wird, die Metallschicht aber so beschaffen ist, dass ihre Wärmeleitung auf ein Minimum reduziert wird. Metallische Beschichtungen sind bei Isolationselementen wegen ihrer hohen Wärmeleitfähigkeit problematisch, sodass die Gefahr besteht, dass die Vorteile der geringen Wärmeleitfähigkeit des Trägerelements durch die hohe Wärmeleitfähigkeit der metallischen Beschichtung zumindest teilweise zunichte gemacht werden. Im Rahmen der vorliegenden Erfindung gelingt es, den Emissionsgrad der Wärmestrahlung (von vorzugsweise < 0.1) erheblich zu reduzieren, die Gasdichte zu optimieren und zugleich die Wärmeleitung durch die metallische Beschichtung auf Grund der überaus geringen Schichtdicke von < 80nm, insbesondere < 50 nm, zu minimieren. Weiters bewirkt die Morphologie insbesondere in der Übergangszone zwischen Polymerträger und Metallbeschichtung, dass der Wärmeübergang zwischen der Metallbeschichtung und dem Trägerelement erschwert wird.

Eine bevorzugte Weiterbildung sieht vor, dass die Beschichtung aus Silber besteht. Silber weist zwar eine außerordentlich hohe Wärmeleitfähigkeit (429 $Wm^{-1}K^{-1}$) auf, sodass eine möglichst geringe Schichtdicke von bevorzugt unter 50 nm besonders wichtig ist, zeichnet sich aber durch eine hohe Oxidationsbeständigkeit, eine hohe Gasdichte und antibakteriellen Eigenschaften aus.

Besonders bevorzugt ist es, wenn die Beschichtung durch Sputterdeposition aufgetragen ist. Besonders bei Silber wird hierbei eine hohe Sputterausbeute beobachtet. Das Sputtern ist im Rahmen der Erfindung besonders vorteilhaft, da es eine hohe Schichtqualität bereits bei sehr dünnen Schichten ermöglicht und eine Grenzschichtbildung auf Polymeren erlaubt. Das Sputtern (Kathodenzerstäubung) ist ein physikalischer Vorgang, bei dem Atome aus einem Festkörper (Target) durch Beschuss mit energiereichen Ionen (vorwiegend Edelgasionen) herausgelöst werden und in die Gasphase übergehen. Bei der Sputterdeposition wird in die Nähe des Targets ein Substrat gebracht, so dass die herausgeschlagenen Atome auf diesem kondensieren und eine Schicht bilden können. Die Sputterdeposition ist somit eine zur Gruppe der PVD-Verfahren gehörende hochvakuumbasierte Beschichtungstechnik, die dem Fachmann bekannt ist und hier daher nicht näher erläutert zu werden braucht.

Das erste und zweite flächige Deckelement, das vorzugsweise jeweils von einer Polymerfolie gebildet ist, kann wie bereits erwähnt ebenflächig und unstrukturiert ausgebildet sein oder aber auch eine Struktur aufweisen. Insbesondere kann das erste und/oder das zweite flächige Deckelement Vertiefungen aufweisen, die gemeinsam mit den Vertiefungen des flächigen Elements, mit dem das flächige Deckelement verbunden ist, geschlossene Zellen begrenzen. Eine bevorzugte Ausbildung sieht hierbei vor, dass das erste und/oder zweite flächige Deckelement eine Vielzahl von dritten bzw. vierten Vertiefungen aufweist, die zu den ersten bzw. zweiten Vertiefungen spiegelbildlich ausgestaltet sind, wobei das erste bzw. zweite flächige Deckelement zwischen den Rändern der Öffnungen benachbarter dritter bzw. vierter Vertiefungen dritte bzw. vierte Verbindungsbereiche ausbildet und die ersten und dritten bzw. die zweiten und vierten Verbindungsbereiche miteinander stoffschlüssig verbunden sind.

Die erfindungsgemäße Struktur aus erstem flächigen Element und zweitem flächigen Element mit zugehörigen flächigen Deckelementen bildet eine Schicht des Isolationselements aus. Das Isolationselement kann aus dieser einen Schicht als einziger Schicht bestehen oder das Isolationselement kann aus zwei oder mehreren solcher aufeinander angeordneter Schichten zusammengesetzt sein, sodass man in einfacher Weise verschiedene Dicken realisieren kann.

Das erfindungsgemäße Isolationselement ist als Paneel ausgebildet, wobei mehrere Paneele zu einem Isolationsbehälter zusammengesetzt werden können, wenn, wie dies einer bevorzugten Weiterbildung entspricht, die Isolationselemente selbsttragend sind. Die Paneele können aber auch zur Innenauskleidung oder zur Außenverkleidung von bestehenden Behältern verwendet werden. Bevorzugt weisen die Paneele an ihren Rändern Verbindungselemente auf, sodass benachbarte Paneele in einfacher Weise miteinander verbunden werden können. Hierbei kann es sich beispielsweise um formschlüssige Verbindungselemente handeln, wie z.B. eine Profilierung zur Herstellung einer Nut-Feder Verbindung.

Grundsätzlich eignen sich die erfindungsgemäßen Isolationselemente sowohl zur Isolierung einer kalten Innenatmosphäre von einer warmen Umgebung als auch zur Isolierung einer warmen Innenatmosphäre von einer kalten Umgebung.

Die Erfindung betrifft weiters ein vorteilhaftes Verfahren zur Herstellung eines Isolationselements mit den Merkmalen des Anspruchs 21.

Eine bevorzugte Verfahrensführung sieht vor, dass die stoffschlüssige Verbindung des tiefgezogenen flächigen Elements mit dem flächigen Deckelement durch Kleben oder Verschweißen, insbesondere Ultraschallschweißen, erfolgt.

Eine weitere bevorzugte Verfahrensführung sieht vor, dass dem Spalt zwischen der ersten und der zweiten Rolle ein Gas zugeführt wird, welches in die Vertiefungen geleitet wird, bevor die Vertiefungen verschlossen werden.

Eine bevorzugte Verfahrensführung sieht vor, dass das flächige Deckelement erwärmt wird und zur Ausbildung von Vertiefungen über die zweite Rolle geführt wird, die Negativformen der Vertiefungen aufweist.

Eine weitere bevorzugte Verfahrensführung sieht vor, dass das flächige Element und/oder das flächige Deckelement eine Beschichtung aufweist und das flächige Element und das flächige Deckelement so zur ersten bzw. zweiten Rolle zugeführt werden, dass die Beschichtung an der dem anderen Element zugewandten Seite angeordnet ist.

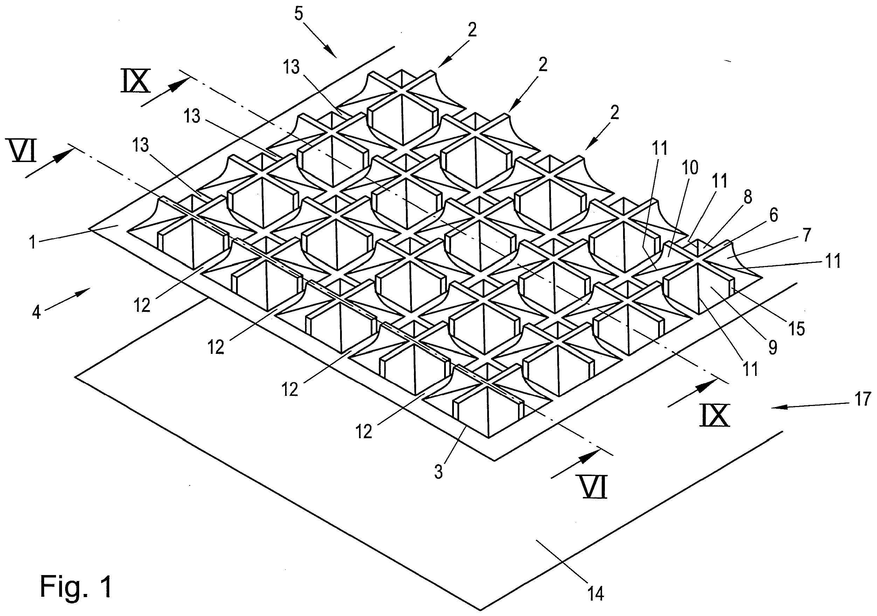

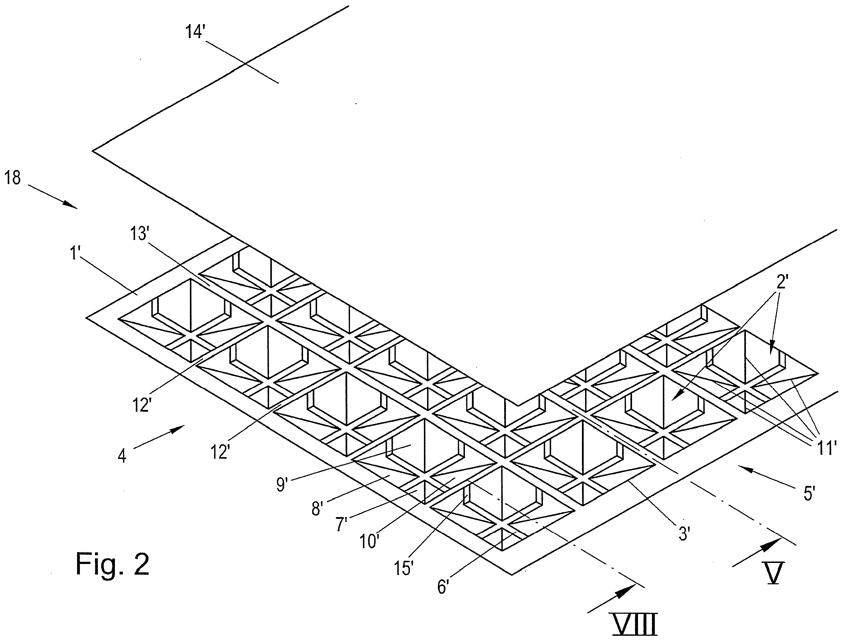

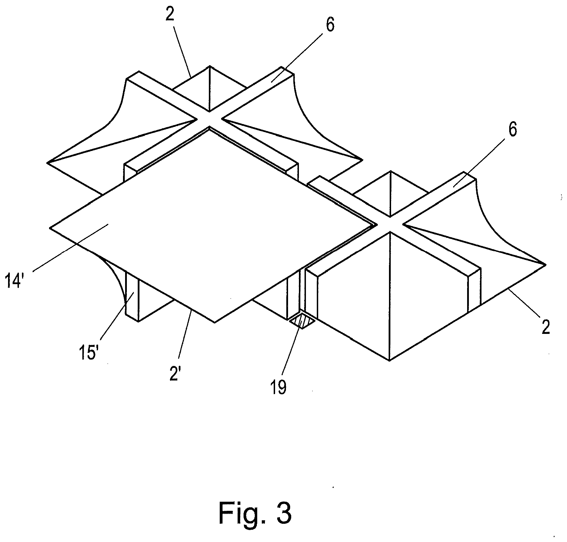

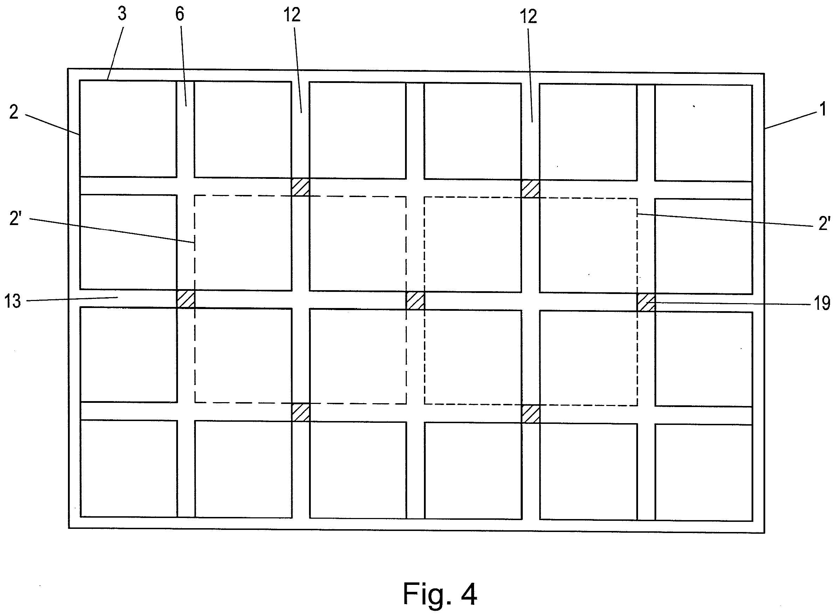

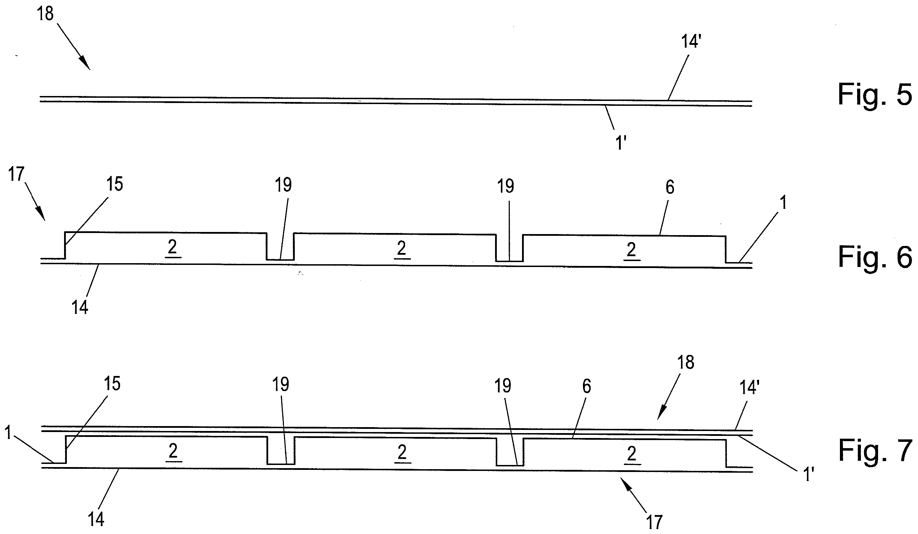

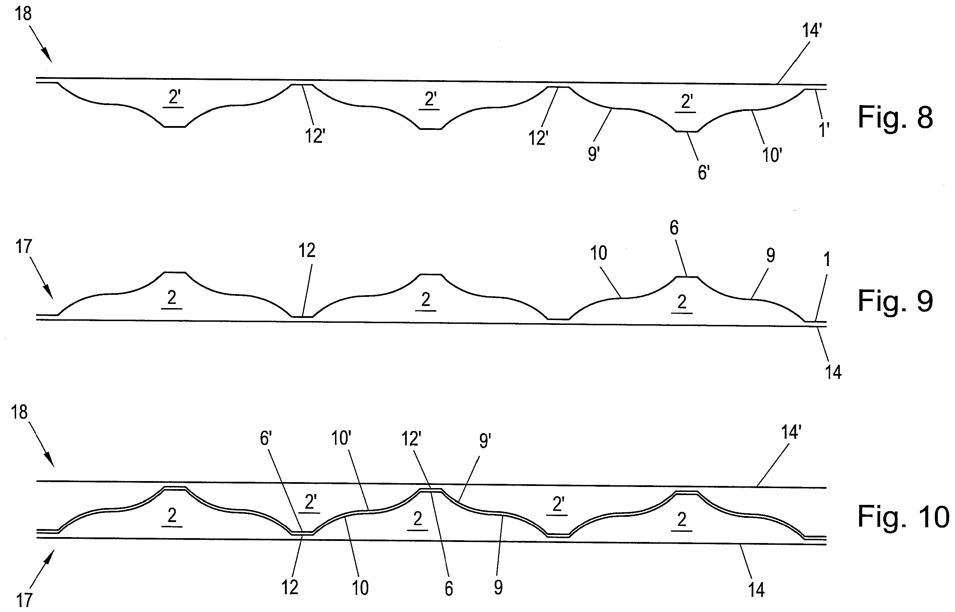

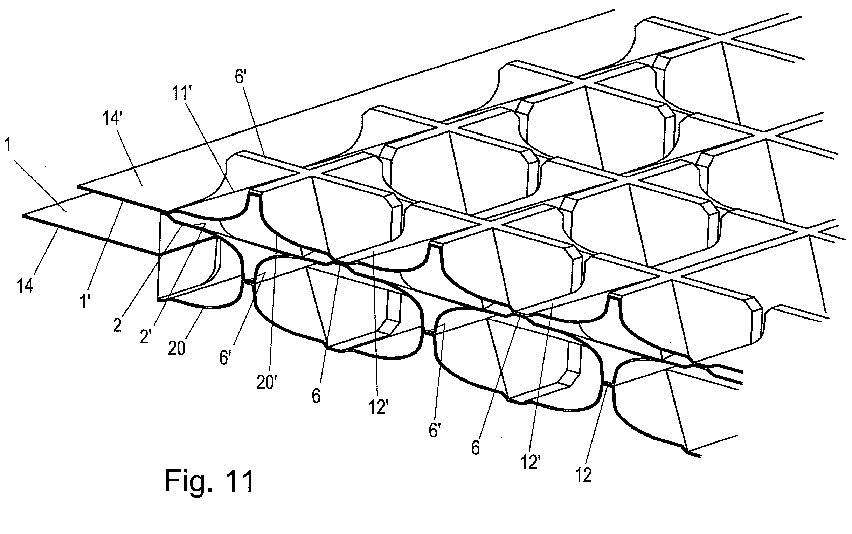

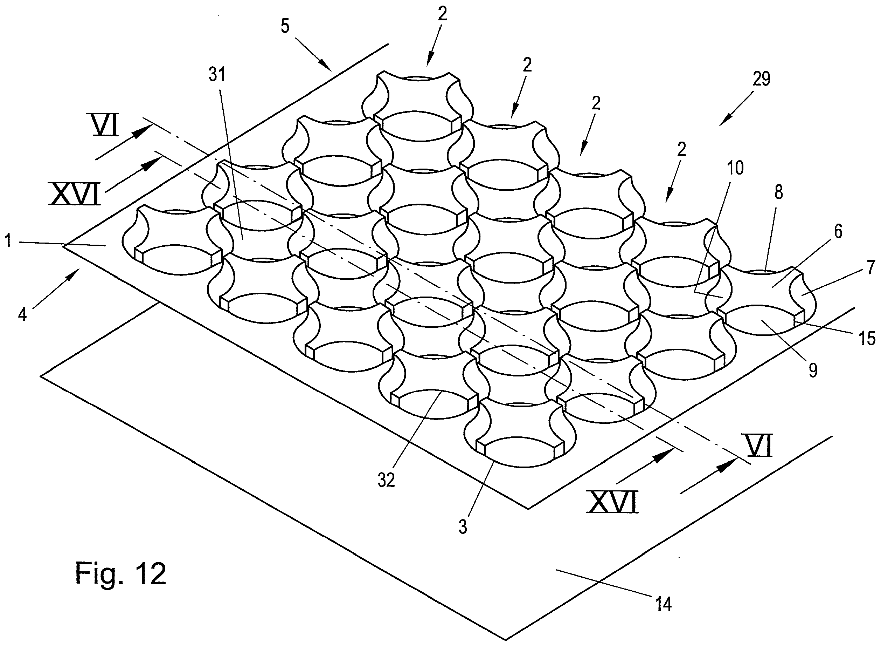

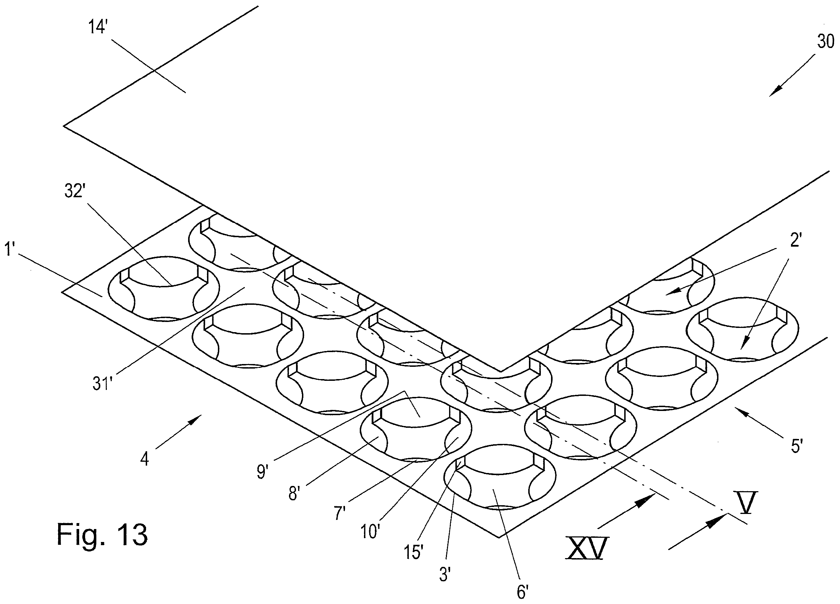

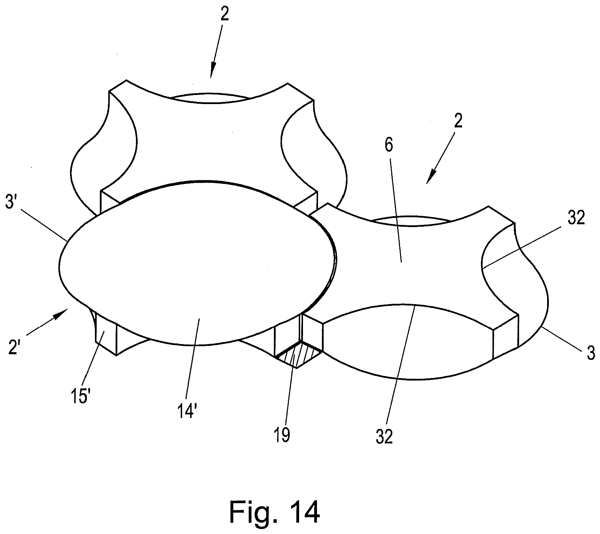

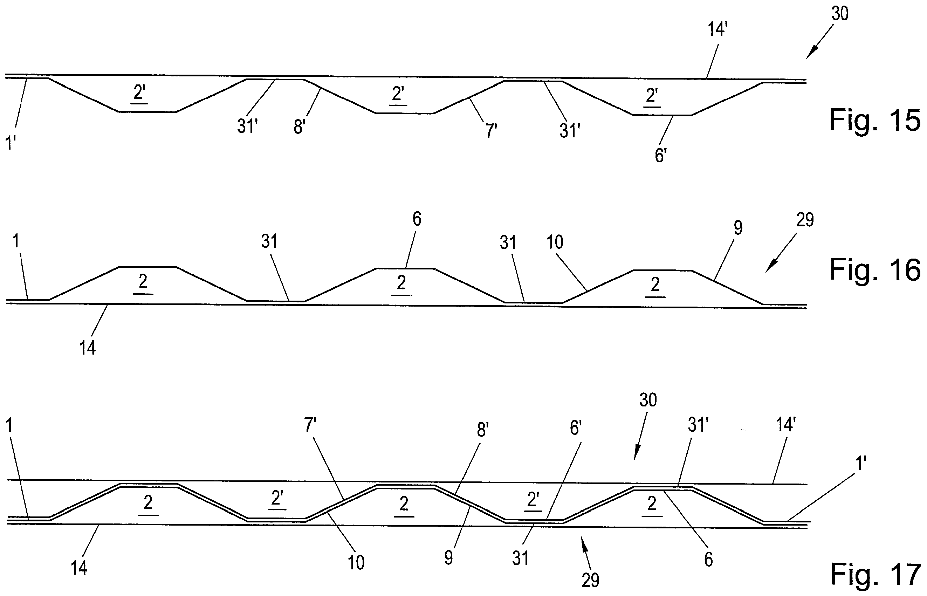

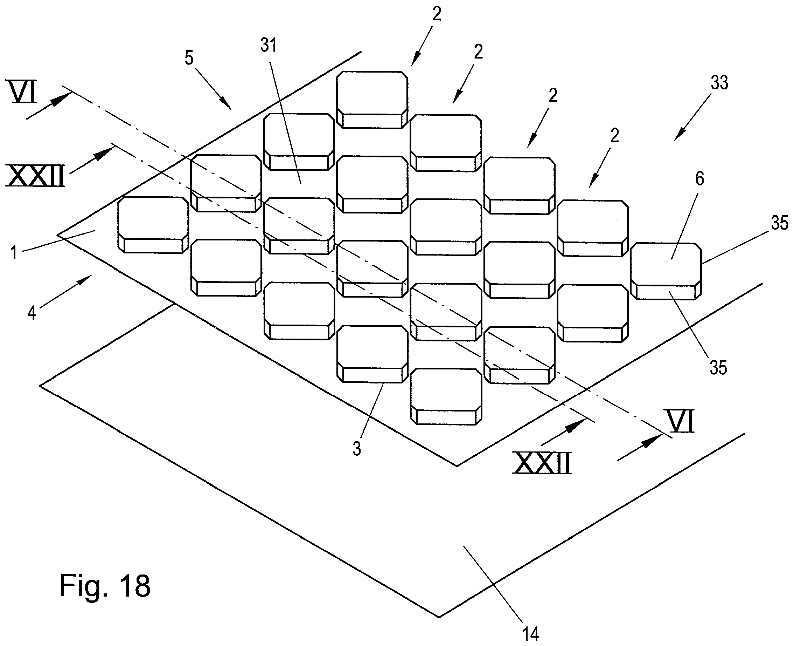

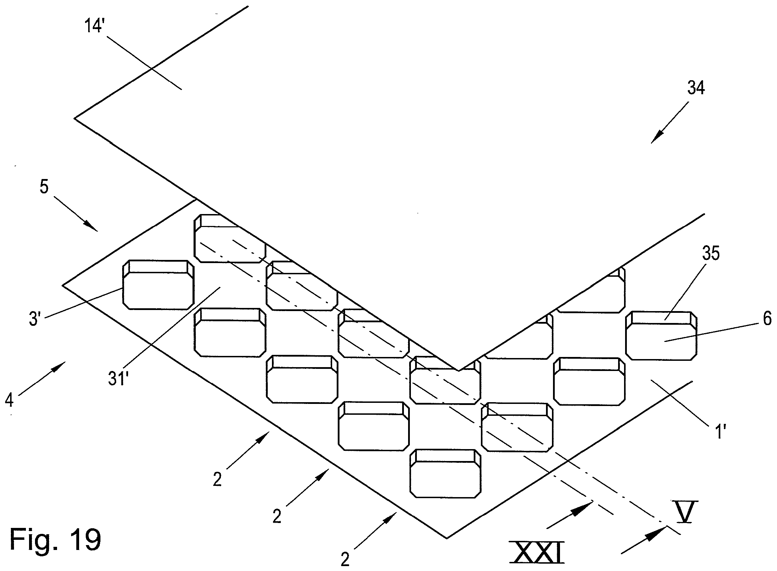

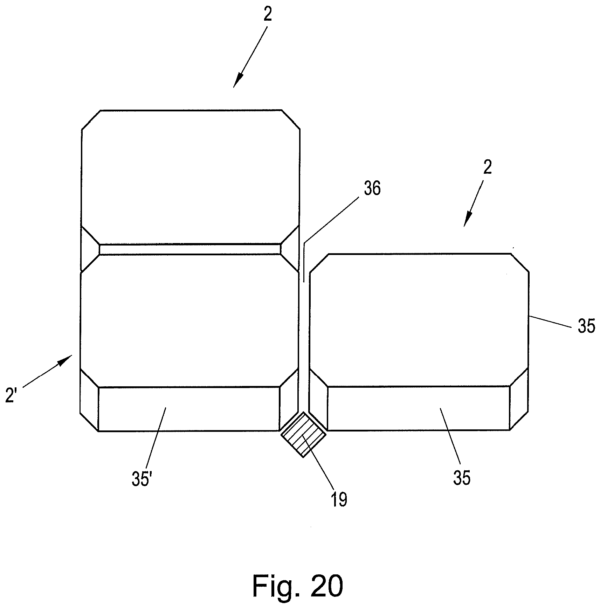

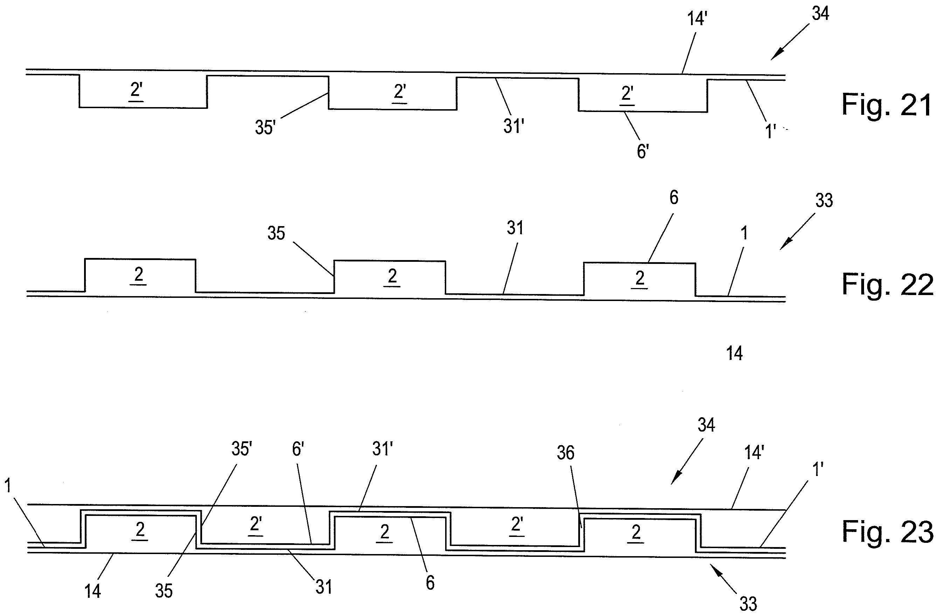

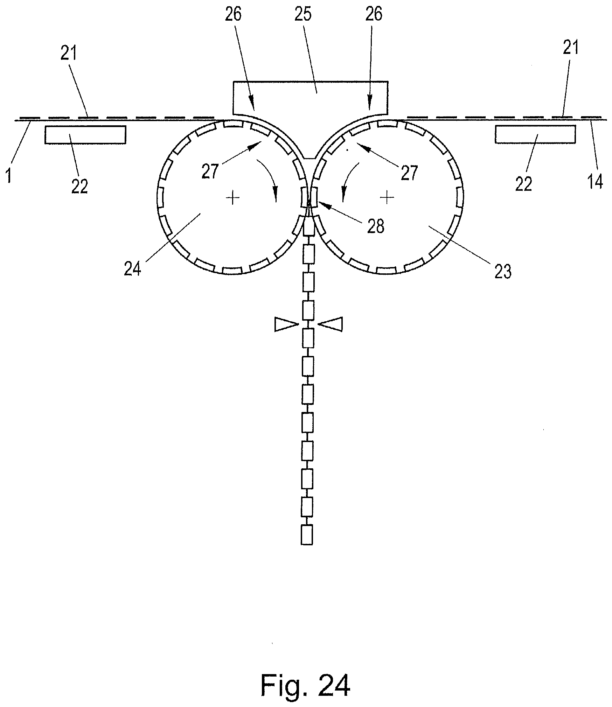

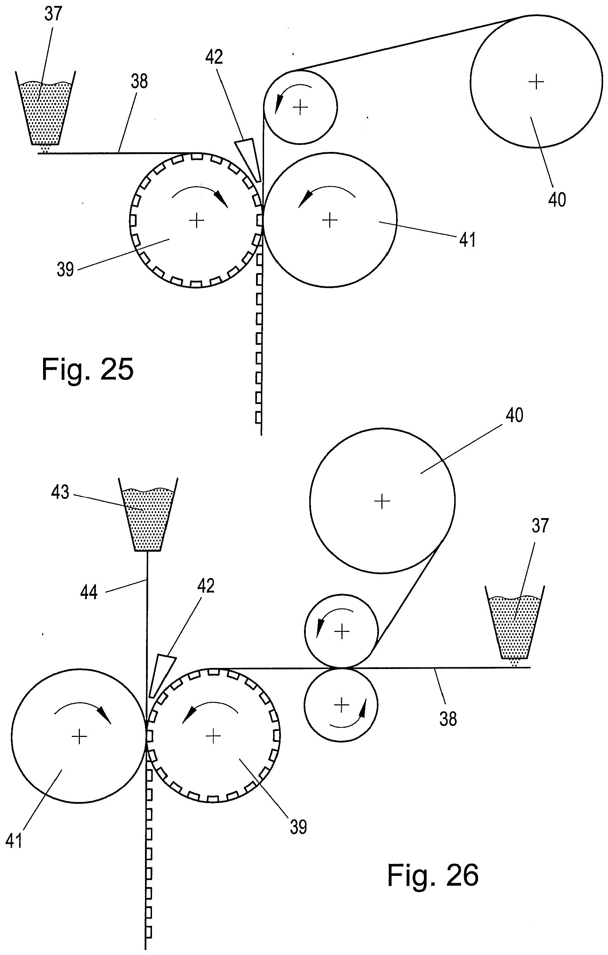

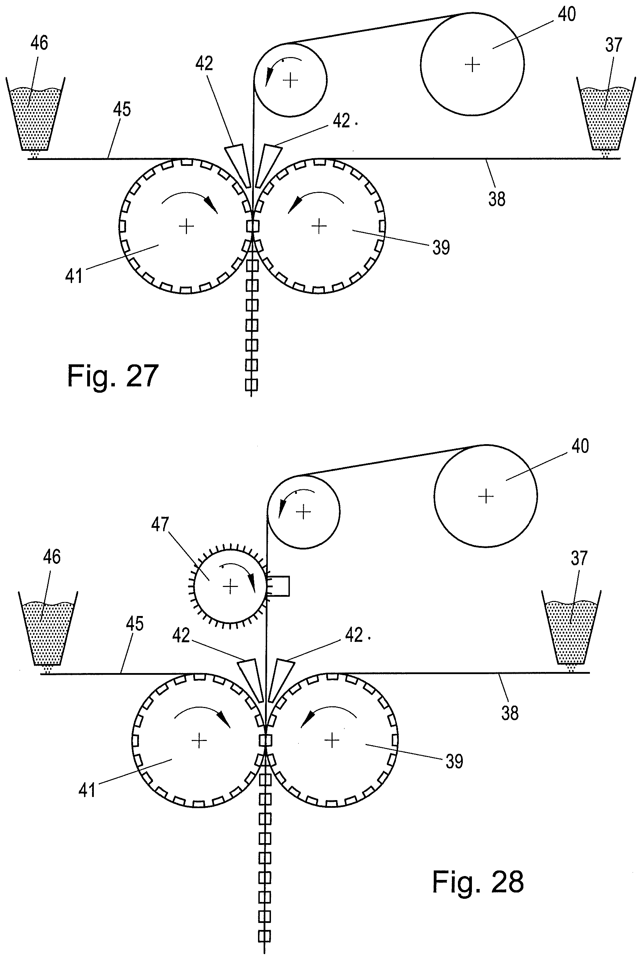

Die Erfindung wird nachfolgend anhand von in der Zeichnung schematisch dargestellten Ausführungsbeispielen näher erläutert. In dieser zeigen Fig. 1 ein erstes flächiges Element mit Vertiefungen von der Rückseite, Fig. 2 ein zweites flächiges Element mit Vertiefungen von der Vorderseite, Fig. 3 eine Detailansicht der Anordnung einer ersten Vertiefung zwischen zwei zweiten Vertiefungen, Fig. 4 eine schematische Draufsicht auf ein flächiges Element, Fig. 5 einen Schnitt des Elements 18 entlang der Linie V-V der Fig. 2, Fig. 6 einen Schnitt des Elements 17 entlang der Linie VI-VI der Fig. 1, Fig. 7 eine Schnittdarstellung entsprechend den Fig. 5 und 6 der ineinander gelegten Elemente 17 und 18, Fig. 8 einen Schnitt des Elements 18 entlang der Linie VIII-VIII der Fig. 2, Fig. 9 einen Schnitt des Elements 17 entlang der Linie IX-IX der Fig. 1, Fig. 10 eine Schnittdarstellung entsprechend den Fig. 8 und 9 der ineinander gelegten Elemente 17 und 18, Fig. 11 eine perspektivische Schnittansicht des Isolationselements, Fig. 12 ein abgewandeltes erstes flächiges Element mit Vertiefungen von der Rückseite, Fig. 13 ein abgewandeltes zweites flächiges Element mit Vertiefungen von der Vorderseite, Fig. 14 eine Detailansicht der Anordnung einer ersten Vertiefung gemäß Fig. 13 zwischen zwei zweiten Vertiefungen gemäß Fig. 12, Fig. 15 einen Schnitt des Elements 30 entlang der Linie XV-XV der Fig. 13, Fig. 16 einen Schnitt des Elements 29 entlang der Linie XVI-XVI der Fig. 12, Fig. 17 eine Schnittdarstellung entsprechend den Fig. 15 und 16 der ineinander gelegten Elemente 29 und 30, Fig. 18 ein abgewandeltes erstes flächiges Element mit Vertiefungen von der Rückseite, Fig. 19 ein abgewandeltes zweites flächiges Element mit Vertiefungen von der Vorderseite, Fig. 20 eine Detailansicht der Anordnung einer ersten Vertiefung gemäß Fig. 19 zwischen zwei zweiten Vertiefungen gemäß Fig. 18, Fig. 21 einen Schnitt des Elements 34 entlang der Linie XXI-XXI der Fig. 19, Fig. 22 einen Schnitt des Elements 33 entlang der Linie XXII-XXII der Fig. 18, Fig. 23 eine Schnittdarstellung entsprechend den Fig. 21 und 22 der ineinander gelegten Elemente 33 und 34, Fig. 24 eine schematische Darstellung einer ersten Variante eines Herstellungsverfahrens, Fig. 25 eine schematische Darstellung einer zweiten Variante eines Herstellungsverfahrens, Fig. 26 eine schematische Darstellung einer dritten Variante eines Herstellungsverfahrens, Fig. 27 eine schematische Darstellung einer vierten Variante eines Herstellungsverfahrens und Fig. 28 eine schematische Darstellung einer fünften Variante eines Herstellungsverfahrens.

In den Fig. 1 bis 10 ist eine erste Ausbildung eines erfindungsgemäßen Isolationselements dargestellt. In Fig. 1 ist ein erstes flächiges Element mit 1 bezeichnet, welches beispielsweise aus einer Polymerfolie besteht. Das erste flächige Element 1 weist eine Vielzahl von ersten Vertiefungen 2 auf, die an der in Fig. 1 dargestellten Rückseite des ersten flächigen Elements 1 von diesem vorragen. Die ersten Vertiefungen 2 bilden jeweils eine quadratische Öffnung 3 aus, wie dies insbesondere in der Ansicht der Vorderseite des identisch aufgebauten Elements 1' gemäß Fig. 2 ersichtlich ist. Die ersten Vertiefungen 2 sind rasterartig angeordnet, wobei das Raster in Richtung des Pfeils 4 verlaufende Zeilen und in Richtung des Pfeils 5 verlaufende Spalten umfasst, die im rechten Winkel zueinander verlaufen.

Die ersten Vertiefungen 2 weisen eine Bodenfläche 6 in Form eines Kreuzes auf, dessen Balken in der Normalprojektion auf das erste flächige Element 1 jeweils die Mittelpunkte gegenüberliegender Seiten des Randes der Öffnungen 3 miteinander verbinden und einen rechten Winkel miteinander einschließen. Die Bodenfläche 6 verläuft parallel zur Fläche des ersten flächigen Elements 1. Die kreuzförmige Bodenfläche 6 ist an jeder der vier Seiten der Vertiefung 2 über einen senkrecht zur Fläche des ersten flächigen Elements 1 verlaufenden Stegabschnitt 15 mit dem Rand der Öffnung 3 verbunden. Die Balken der Bodenfläche 6 und die Stegabschnitte 15 unterteilen die Vertiefung 2 in vier Viertel, die jeweils einen im Wesentlichen quadratischen Grundriss aufweisen. In jedem Viertel ist ein Wandabschnitt 7, 8, 9 und 10 vorgesehen, der die Bodenfläche 6 mit dem Rand der Öffnung 3 verbindet und dementsprechend schräg bzw. gekrümmt ausgebildet ist. Die Wandabschnitte 7, 8, 9 und 10 umfassen jeweils eine Gerade 11, welche den Kreuzungspunkt der kreuzförmigen Bodenfläche 6 mit dem nächstgelegenen Eckpunkt der quadratischen Öffnung 3 verbindet.

Die ersten Vertiefungen 2 können in einfacher Weise durch Tiefziehen aus dem ersten flächigen Element 1 hergestellt werden.

Zwischen den ersten Vertiefungen 2 umfasst das erste flächige Element 1 erste streifenförmige Verbindungsbereiche 12 und 13, wobei eine Mehrzahl von ersten streifenförmigen Verbindungsbereichen 12 und eine Mehrzahl von ersten streifenförmigen Verbindungsbereichen 13 ein Gitter ausbilden. In den ersten Verbindungsbereichen 12 und 13 wird ein erstes flächiges Deckelement 14, das im vorliegenden Ausführungsbeispiel unstrukturiert, d.h. ebenflächig ist, mit dem ersten flächigen Element 1 stoffschlüssig verbunden, um dadurch die Öffnungen 3 der ersten Vertiefungen 1 zu schließen und eine erste Gruppe von geschlossenen Zellen zu erhalten. In der Darstellung gemäß Fig. 1 ist das erste flächige Deckelement 14 jedoch im nicht verbundenen Zustand gezeigt. Die Vertiefungen 2 können vor dem Verschließen mit einem Gas befüllt werden, welches einen Wärmeleitkoeffizienten von < 0,026 W/mK aufweist, um geschlossene, gasgefüllte Zellen zu erhalten.

Fig. 2 zeigt ein zweites flächiges Element 1', das mit einer Vielzahl von zweiten Vertiefungen 2' versehen ist, wobei der Aufbau identisch ist wie der des ersten flächigen Elements, sodass auf die obige Beschreibung verwiesen wird und die gleichen Bezugszeichen (um ein "'" ergänzt) Verwendung finden. Das zweite flächige Element 1' umfasst zweite streifenförmige Verbindungsbereiche 12' und 13'.

Die Formgebung der Vertiefungen 2,2' ist derart vorgesehen, dass das in Fig. 1 gezeigte Element 17 (bestehend aus dem ersten flächigen Element 1, mit welchem das erste flächige Deckelement 14 verbunden ist), und das in Fig. 2 gezeigte Element 18 (bestehend aus dem zweiten flächigen Element 1', mit welchem das zweite flächige Deckelement 14' verbunden ist), ineinanderpassen, wenn sie mit zueinander weisenden Rückseiten zusammengefügt werden. Dabei kommt jeweils eine der zweiten Vertiefungen 2' zwischen einer Mehrzahl von ersten Vertiefungen 2 zu liegen und gleichzeitig kommt jeweils eine der ersten Vertiefungen 2 zwischen einer Mehrzahl von zweiten Vertiefungen 2' zu liegen. Dies ist schematisch in Fig. 3 gezeigt. Es ist ersichtlich, dass eine zweite Vertiefung 2' den Zwischenraum zwischen vier ersten Vertiefungen 2 (von denen in Fig. 3 der Übersichtlichkeit halber nur zwei gezeigt sind) vollständig ausfüllt. Um dies zu ermöglichen, ist vorgesehen, dass die Breite der Balken der kreuzförmigen Bodenfläche 6 und die Breite der Verbindungsbereiche 12' bzw. 13' identisch gewählt sind. Bevorzugt beträgt die genannte Breite zwischen 3 und 5 mm. Wie in Fig. 3 dargestellt, führt eine derartige Formgebung dazu, dass ein maximales Volumen zwischen den parallelen Begrenzungsebenen des aus den Elementen 17 und 18 bestehenden Isolationselements mit geschlossenen Zellen, die mit einem Gas gefüllt sein können, ausgefüllt ist. Lediglich relativ kleine Volumina bleiben bei dem vorliegenden Ausführungsbeispiel frei, nämlich jeweils das Volumen eines Quaders mit der mit 19 bezeichneten quadratischen Grundfläche.

In Fig. 4 ist ein Ausschnitt des aus den Elementen 17 und 18 zusammengesetzten Isolationselements im Grundriss gezeigt, wobei der Umriss der ersten Vertiefungen 2 mit durchgehender Linie und der Umriss der zweiten Vertiefungen 2' mit unterbrochener Linie dargestellt ist.

In der Schnittansicht gemäß Fig. 5 ist das Element 18 in einem Schnitt entsprechend der Linie V-V der Fig. 2 gezeigt. Die Schnittansicht zeigt nur die eigentliche Schnittlinie, nicht jedoch die hinter der Schnittebene liegenden Kanten und dgl. Dasselbe gilt für die Schnittansicht gemäß Fig. 6, welche das Element 17 in einem Schnitt entsprechend der Linie VI-VI der Fig. 1 zeigt. In Fig. 7 sind die beiden Schnittansichten gemäß Fig. 5 und 6 zusammengeführt, sodass die Elemente 17 und 18 ausschnittsweise im zusammengefügten Zustand dargestellt sind, bei dem die Vertiefungen 2 und 2' wie in Fig. 3 gezeigt zwischeneinander liegen.

Die Schnittansichten gemäß Fig. 8, 9 und 10 entsprechen den Schnittansichten gemäß Fig. 5, 6 und 7, wobei jedoch die Schnittführung versetzt erfolgt, nämlich beim Element 18 entlang der Linie VIII-VIII der Fig. 2 und beim Element 17 entlang der Linie IX-IX der Fig. 1. In den Fig. 8 und 9 sind die Elemente 17 und 18 gesondert dargestellt, in der Fig. 10 sind die Elemente 17 und 18 ausschnittsweise im zusammengefügten Zustand dargestellt, bei dem die Vertiefungen 2 und 2' wie in Fig. 3 gezeigt zwischeneinander liegen. Es ist ersichtlich, dass die Wände 9 und 9' sowie 10 und 10' der Vertiefungen 2 und 2' eng aneinander liegen, insbesondere vollflächig aneinander liegen, und der Boden 6 der ersten Vertiefung 2 jeweils auf dem zweiten Verbindungsabschnitt 12' des Elements 18 aufliegt und umgekehrt der Boden 6' der zweiten Vertiefung 2' jeweils auf dem ersten Verbindungsabschnitt 12 des Elements 17 aufliegt. Im aufliegenden Bereich kann die Verbindung mit Hilfe einer stoffschlüssigen Verbindung, wie z.B. mittels eines Klebers oder durch Schweißen erfolgen.

In Fig. 11 ist eine abgewandelte Ausbildung eines Isolationselements dargestellt, bei dem sowohl das Element 17 als auch das Element 18 jeweils aus einem flächigen Element 1 bzw. 1' besteht, das mit einem flächigen Deckelement 14 bzw. 14' verbunden ist, das im Unterschied zu den Ausbildungen gemäß den Fig. 1 bis 10 nicht ebenflächig ist, sondern spiegelbildliche Vertiefungen 20 bzw. 20' aufweist.

Bei einer weiteren, nicht dargestellten Variante kann zwischen dem flächigen Element 1 und dem flächigen Deckelement 14 der Fig. 11 ein (einziges) zusätzliches ebenflächiges Element angeordnet sein, welches den von den spiegelbildlichen Vertiefungen 2 und 20 gebildeten Hohlraum wiederum in zwei Teile teilt. Dieses zusätzliche ebenflächige Element kann in vorteilhafter Weise ein- oder zweitseitig mit einer Metallbeschichtung versehen sein. Ebenso kann auch zwischen dem flächigen Element 1' und dem flächigen Deckelement 14' der Fig. 11 ein (einziges) zusätzliches ebenflächiges Element angeordnet sein, welches den von den spiegelbildlichen Vertiefungen 2' und 20' gebildeten Hohlraum wiederum in zwei Teile teilt.

In den Fig. 12 bis 17 ist eine zweite Ausbildung eines erfindungsgemäßen Isolationselements dargestellt. Im Unterschied zur ersten Ausbildung ist die Form der Vertiefungen 2 und 2' anders gestaltet. Die in den Fig. 1 bis 10 verwendeten Bezugszeichen wurden jedoch für gleiche Teile beibehalten.

In Fig. 12 und 13 ist ersichtlich, dass die Vertiefungen 2 bzw. 2' jeweils eine kreisrunde Öffnung 3 bzw. 3' ausbilden, wobei die flächigen Elemente 1 und 1' wieder identisch aufgebaut sind. Die ersten Vertiefungen 2 weisen eine Bodenfläche 6 in Form eines Kreuzes mit verrundeten bzw. annähernd viertelkreisförmigen Verbindungen bzw. Rändern 32 zwischen den Balken des Kreuzes auf. Die von ersten Vertiefungen 2 freie Fläche zwischen den ersten Vertiefungen 2 des ersten flächigen Elements 1 bildet einen Verbindungsbereich 31 aus, in dem das erste flächige Deckelement 14, das im vorliegenden Ausführungsbeispiel unstrukturiert, d.h. ebenflächig ist, mit dem ersten flächigen Element 1 stoffschlüssig verbunden ist, um dadurch die Öffnungen 3 der ersten Vertiefungen 1 zu schließen und eine erste Gruppe von geschlossenen Zellen zu erhalten. In der Darstellung gemäß Fig. 12 ist das erste flächige Deckelement 14 jedoch im nicht verbundenen Zustand gezeigt. Die ersten Vertiefungen 2 können vor dem Verschließen mit einem Gas befüllt werden, welches einen Wärmeleitkoeffizienten von < 0,026W/mK aufweist, um geschlossene, gasgefüllte Zellen zu erhalten.

Die Formgebung der Vertiefungen 2,2' ist derart vorgesehen, dass das in Fig. 12 gezeigte Element 29 (bestehend aus dem ersten flächigen Element 1, mit welchem das erste flächige Deckelement 14 verbunden ist), und das in Fig. 13 gezeigte Element 30 (bestehend aus dem zweiten flächigen Element 1', mit welchem das zweite flächige Deckelement 14' verbunden ist), ineinanderpassen, wenn sie mit zueinander weisenden Rückseiten zusammengefügt werden. Dabei kommt jeweils eine der zweiten Vertiefungen 2' zwischen einer Mehrzahl von ersten Vertiefungen 2 zu liegen und gleichzeitig kommt jeweils eine der ersten Vertiefungen 2 zwischen einer Mehrzahl von zweiten Vertiefungen 2' zu liegen. Dies ist schematisch in Fig. 14 gezeigt. Es ist ersichtlich, dass eine zweite Vertiefung 2' den Zwischenraum zwischen vier ersten Vertiefungen 2 (von denen in Fig. 14 der Übersichtlichkeit halber nur zwei gezeigt sind) vollständig ausfüllt. Um dies zu ermöglichen, ist vorgesehen, dass der Radius der Ränder 32 im Wesentlichen identisch ist mit dem Radius der kreisrunden Öffnung 3' und der Radius der Ränder 32' im Wesentlichen identisch ist mit dem Radius der kreisrunden Öffnung 3. Auf diese Weise schließen die Ränder 32 des Bodens 6 von vier Vertiefungen 2 zusammen jeweils einen kreisrunden Bereich ein, dessen Größe der Öffnung 3' einer Vertiefung 2' entspricht. Zwischen den umfangsmäßig aneinander anschließenden Rändern 32 ist dabei jeweils ein Abstand bzw. ein Zwischenbereich 19 vorgesehen, der notwendig ist, um benachbarte Vertiefungen 2 bzw. 2' voneinander zu beabstanden und unter Ausbildung von voneinander getrennten Zellen mit Hilfe des flächigen Deckelements 14 verschließen zu können. Außerdem schließen annähernde Viertelkreisbögen der Ränder der Öffnungen 3 von vier Vertiefungen 2 zusammen jeweils einen Flächenbereich ein, dessen Größe und Form dem Boden 6' einer Vertiefung 2' entspricht. Auch hier ist zwischen den aneinander anschließenden Kreisbögen der Ränder 3 jeweils ein Abstand bzw. ein Zwischenbereich 19 vorgesehen.

Wie in Fig. 14 dargestellt, führt eine derartige Formgebung dazu, dass ein maximales Volumen zwischen den parallelen Begrenzungsebenen des aus den Elementen 29 und 30 bestehenden Isolationselements mit geschlossenen Zellen, die mit einem Gas gefüllt sein können, ausgefüllt ist. Lediglich relativ kleine Volumina bleiben bei dem vorliegenden Ausführungsbeispiel frei, nämlich jeweils das Volumen eines Quaders mit der mit 19 bezeichneten quadratischen Grundfläche.

Schnittansichten der Elemente 29 und 30 entlang der Linie V-V bzw. VI-VI sind in den Fig. 5 und 6 dargestellt. Dazu versetzte Schnitte sind in den Fig. 15 und 16 dargestellt, wobei der Schnitt beim Element 30 entlang der Linie XV-XV der Fig. 13 und beim Element 29 entlang der Linie XVI-XVI der Fig. 12 verläuft. Die Schnittansichten zeigen wiederum nur die eigentliche Schnittlinie, nicht jedoch die hinter der Schnittebene liegenden Kanten und dgl. In den Fig. 15 und 16 sind die Elemente 29 und 30 gesondert dargestellt, in der Fig. 17 sind die Elemente 29 und 30 ausschnittsweise im zusammengefügten Zustand dargestellt, bei dem die Vertiefungen 2 und 2' wie in Fig. 14 gezeigt zwischeneinander liegen. Es ist ersichtlich, dass die Wände 7' und 10 sowie 8' und 9 der Vertiefungen 2 und 2' eng aneinander liegen, insbesondere vollflächig aneinander liegen, und der Boden 6 der ersten Vertiefung 2 jeweils auf dem zweiten Verbindungsabschnitt 31' des Elements 30 aufliegt und umgekehrt der Boden 6' der zweiten Vertiefung 2' jeweils auf dem ersten Verbindungsabschnitt 31 des Elements 29 aufliegt. Im aufliegenden Bereich kann die Verbindung mit Hilfe einer stoffschlüssigen Verbindung, wie z.B. mittels eines Klebers oder durch Schweißen erfolgen.

In den Fig. 18 bis 23 ist eine dritte Ausbildung eines erfindungsgemäßen Isolationselements dargestellt. Im Unterschied zur ersten und zweiten Ausbildung ist die Form der Vertiefungen 2 und 2' anders gestaltet. Die in den Fig. 1 bis 10 verwendeten Bezugszeichen wurden jedoch für gleiche Teile beibehalten.

In Fig. 18 und 19 ist ersichtlich, dass die Vertiefungen 2 bzw. 2' jeweils eine im Wesentlichen rechteckige bzw. quadratische Öffnung 3 bzw. 3' ausbilden, wobei die flächigen Elemente 1 und 1' wieder identisch aufgebaut sind. Die ersten Vertiefungen 2 weisen eine Bodenfläche 6 in Form eines Rechtecks bzw. Quadrats mit abgeschrägten Ecken auf, sodass sich ein Achteck mit abwechselnden langen und kurzen Seiten ergibt. Die Bodenfläche ist über bevorzugt senkrechte Seitenwände 35 mit der Öffnung 3 verbunden. Die von ersten Vertiefungen 2 freie Fläche zwischen den ersten Vertiefungen 2 des ersten flächigen Elements 1 bildet einen Verbindungsbereich 31 aus, in dem das erste flächige Deckelement 14, das im vorliegenden Ausführungsbeispiel unstrukturiert, d.h. ebenflächig ist, mit dem ersten flächigen Element 1 stoffschlüssig verbunden ist, um dadurch die Öffnungen 3 der ersten Vertiefungen 1 zu schließen und eine erste Gruppe von geschlossenen Zellen zu erhalten. In der Darstellung gemäß Fig. 18 ist das erste flächige Deckelement 14 jedoch im nicht verbundenen Zustand gezeigt. Die ersten Vertiefungen 2 können vor dem Verschließen mit einem Gas befüllt werden, welches einen Wärmeleitkoeffizienten von < 0,026W/mK aufweist, um geschlossene, gasgefüllte Zellen zu erhalten.

Die Formgebung der Vertiefungen 2,2' ist derart vorgesehen, dass das in Fig. 18 gezeigte Element 33 (bestehend aus dem ersten flächigen Element 1, mit welchem das erste flächige Deckelement 14 verbunden ist), und das in Fig. 19 gezeigte Element 34 (bestehend aus dem zweiten flächigen Element 1', mit welchem das zweite flächige Deckelement 14' verbunden ist), ineinanderpassen, wenn sie mit zueinander weisenden Rückseiten zusammengefügt werden. Dabei kommt jeweils eine der zweiten Vertiefungen 2' zwischen einer Mehrzahl von ersten Vertiefungen 2 zu liegen und gleichzeitig kommt jeweils eine der ersten Vertiefungen 2 zwischen einer Mehrzahl von zweiten Vertiefungen 2' zu liegen. Dies ist schematisch in Fig. 20 gezeigt. Es ist ersichtlich, dass eine zweite Vertiefung 2' den freien Raum zwischen vier ersten Vertiefungen 2 (von denen in Fig. 20 der Übersichtlichkeit halber nur zwei gezeigt sind) nahezu vollständig ausfüllt. Eine derartige Formgebung dazu, dass ein maximales Volumen zwischen den parallelen Begrenzungsebenen des aus den Elementen 33 und 34 bestehenden Isolationselements mit geschlossenen Zellen, die mit einem Gas gefüllt sein können, ausgefüllt ist. Lediglich relativ kleine Volumina bleiben bei dem vorliegenden Ausführungsbeispiel frei, nämlich jeweils das Volumen eines Quaders mit der mit 19 bezeichneten quadratischen Grundfläche und das Volumen von streifenförmigen Bereichen 36 zwischen den Seitenflächen 35 und 35' der Vertiefungen 2 und 2'.

Schnittansichten der Elemente 33 und 34 entlang der Linie V-V bzw. VI-VI sind in den Fig. 5 und 6 dargestellt. Dazu versetzte Schnitte sind in den Fig. 21 und 22 dargestellt, wobei der Schnitt beim Element 34 entlang der Linie XXI-XXI der Fig. 19 und beim Element 33 entlang der Linie XXII-XXII der Fig. 18 verläuft. Die Schnittansichten zeigen wiederum nur die eigentliche Schnittlinie, nicht jedoch die hinter der Schnittebene liegenden Kanten und dgl. In den Fig. 21 und 22 sind die Elemente 33 und 34 gesondert dargestellt, in der Fig. 23 sind die Elemente 33 und 34 ausschnittsweise im zusammengefügten Zustand dargestellt, bei dem die Vertiefungen 2 und 2' wie in Fig. 20 gezeigt zwischeneinander liegen. Es ist ersichtlich, dass die Wände 35 und 35' der Vertiefungen 2 und 2' durch den Spalt 36 voneinander beabstandet sind und der Boden 6 der ersten Vertiefung 2 jeweils auf dem zweiten Verbindungsabschnitt 31' des Elements 34 aufliegt und umgekehrt der Boden 6' der zweiten Vertiefung 2' jeweils auf dem ersten Verbindungsabschnitt 31 des Elements 33 aufliegt. Im aufliegenden Bereich kann die Verbindung mit Hilfe einer stoffschlüssigen Verbindung, wie z.B. mittels eines Klebers oder durch Schweißen erfolgen.

Zusammenfassend zeichnet sich die Erfindung dadurch aus, dass eine höchstmögliche Gasfüllung erreicht werden kann, bei gleichzeitig minimaler Wärmeleitung und effizienter und kostengünstiger Produktion. Die Zellstruktur wird in einem Ausführungsbeispiel hierbei so optimiert, dass folgende Punkte erfüllt sind, wobei im Folgenden auf die erste Ausbildung gemäß den Fig. 1 bis 10 Bezug genommen wird:

1) Die einzelne Elemente 17,18 sind aus zwei Folien 1,14 bzw. 1',14' herstellbar, deren Zellen mit einem Gas gefüllt werden.
2) Jede einzelne Zelle ist abgeschlossen.
3) Leere (also nicht gasgefüllte) Zwischenräume werden minimiert.
4) Die Wärmeleitung durch die Zellstruktur wird bei gleichbleibender Gasfüllung minimiert. Das heißt, dass die Neigung und Form der Wände der Vertiefungen 2,2' optimiert werden soll.
5) Die Oberfläche der gasgefüllten Zellen soll mit einem Metall beschichtet sein.
6) Eine weitere Optimierung (siehe Fig. 11) sieht vor, dass man zwei tiefgezogene Folien 1,14 bzw. 1',14' miteinander verbindet. Dadurch kann man die Kosten erneut senken (nur die Hälfte der Verschweiss-/Klebeprozesse) und die Leistung kann gesteigert werden, da die Wärmestrahlung weiter minimiert werden kann.

Auf Grund der Punkte 2) und 3) muss jedoch ein Kompromiss eingegangen werden. Durch das Verschließen der Vertiefungen 2 muss ein Steg bzw. ein Verbindungsbereich 12,13 vorhanden sein, durch welchen aber unerwünschte Zwischenräume 19 entstehen. Die Breite der Verbindungsbereiche 12,13 bestimmt, wie groß die Zwischenräume 19 innerhalb eines Elements 17,18 sind.

Die Formgebung der Vertiefungen erlaubt es, die Wärmeleitung durch das Isolationselement zu vermindern. Dabei sind die Zellen so konstruiert, dass der Weg, der durch die Gerade 11 definiert ist, für die Wärmeleitung über die Wände der Vertiefungen maximiert wird. Anhand folgender Beispielrechnung, lässt sich nachvollziehen, weshalb dies wichtig ist.

$$\dot{Q} = \frac{\lambda}{d} * A * \Delta T$$
Wärmeleitung

In der allgemeinen Form ist die Wärmeleitung das Produkt aus Wärmeleitkoeffizient, Fläche und Temperaturdifferenz geteilt durch die Dicke der Isolation. Im Fall einer einzelnen Zelle beschreibt die Fläche den Querschnitt und die Dicke beschreibt den Weg 11. Die Fläche bleibt in allen Fällen dieselbe. Es ist aber anzustreben, den Weg $d$ zu maximieren. Das gelingt, indem die Wände die viereckige Öffnung 3 mit der kreuzförmigen Bodenfläche 6 verbinden. Es lässt sich zeigen, dass die Kreuzstruktur die Wärmeleitung minimiert.

Um zu einer optimalen Lösung zu gelangen, hat man sich daran orientiert, jede der drei Wärmeübertragungen zu minimieren. Dazu wurden folgende Punkte verfolgt:

### 1) Die Isolation soll gasgefüllt sein

Um die Wärmeleitung zu minimieren, wird die Isolation gasgefüllt. Wie bereits kurz beschrieben, besteht die Isolation aus einem Zellensystem aus geschlossenen Zellen. Durch das Zellensystem werden Leerräume generiert. Indem man die Leerräume mit Gas füllt, lässt sich in den Leerräumen der Wärmeleitkoeffizient von 0,026W/mK (Luft) um ein Vielfaches minimieren. Um einen tiefen Dämmwert zu erhalten, muss offensichtlich möglichst viel der Isolation mit Gas gefüllt sein.

### 2) Gasfüllung

Wie unter Punkt 1) erklärt, werden die Hohlräume mit Gas gefüllt, um den Dämmwert zu verbessern. Damit eine Verbesserung stattfindet, wird ein Gas verwendet, dass einen tieferen Wärmeleitkoeffizienten als Luft aufweist (0,026W/mK). Es ist somit ein Gas anzustreben, das einen Wärmeleitkoeffizienten aufweist von < 0,017W/mK, besser < 0,009W/mK, idealerweise < 0,0055W/mK.

### 3) Folienbeschichtung

Wie oben beschrieben, besteht die Isolation in vorteilhafter Weise aus einer Kunststofffolie. Die Zellen werden durch die Verformung der Folie erzeugt. Somit stellt die Oberfläche der Folie auch die Oberfläche in der Zelle dar. Um die Wärmestrahlung sowohl außerhalb als auch innerhalb jeder Zelle zu minimieren, kann jede Schicht mit einem Material beschichtet werden, das einen tiefen Emissionsgrad aufweist. Mit folgender Gleichung lässt sich leicht berechnen, dass eine Beschichtung einen großen Einfluss hat:

$$\dot{Q}_{rad} = \frac{\sigma(T_1^4 - T_2^4)}{\frac{1-\varepsilon_1}{A_1\varepsilon_1} + \frac{1}{A_1 F_{1\to2}} + \frac{1-\varepsilon_2}{A_2\varepsilon_2}}$$

Durch die Beschichtung werden die Emissionswerte $\varepsilon_1$ und $\varepsilon_2$ extrem herabgesetzt. Dabei sind Werte anzustreben, die unter 0,5, besser unter 0,25, am besten unter 0,04 liegen. Die Beschichtung kann auf einer Seite oder auf beiden Seiten aufgetragen sein. Das Aluminium verschlechtert die Struktur-Wärmeleitung. Deshalb ist eine Schichtstärke von <500nm, besser <200nm, idealerweise 20-80nm anzustreben.

### 4) Optimierung der Form der einzelnen Zellen derart, dass eine minimale Struktur-Wärmeleitung bei maximaler Platzausnutzung resultiert.

Um eine möglichst gasgefüllte Isolation zu erhalten, wurde die Form der Zellen so gewählt, dass mehrere Zellen wiederum das Negativ einer Zelle darstellen. So lassen sich die einzelnen Schichten ineinander stapeln und der gasgefüllte Raum am besten nutzen. Die bevorzugte Zellenform wird nachfolgend beschrieben. Die Öffnung der Vertiefung stellt ein Quadrat dar. Die Grundfläche der Vertiefung stellt ein Kreuz dar. Die Verbindung der beiden Flächen erfolgt an jeder Stelle über den kürzesten Weg.

### 5) Konvektion wird unterbunden

Ein weiterer Vorteil geschlossener Zellen liegt darin, dass die Zirkulation innerhalb einer geschlossenen Zelle auf ein Minimum reduziert wird.

Der Wärmeübergangskoeffizient

$$\alpha = \frac{Nu * \lambda_F}{L}$$

beschreibt, wie groß der Wärmeaustausch von einem gasförmigen zu einem festen Medium ist. Die Nusseltzahl $Nu$ bleibt nur verhältnismässig klein, solange eine laminare Strömung vorherrscht. Das wird durch geschlossene Zellen garantiert.

Die vorliegende Erfindung weist bei gleichbleibender Leistung einige Vorteile gegenüber herkömmlichen Isolationen auf.

- Durch die geschlossenen Zellen lässt sich die Isolation beliebig zuschneiden und ist somit sehr flexibel einsetzbar.

- Durch das Schichtensystem lässt sich jede gewünschte Isolationsstärke herstellen.

- Für die Produktion der Isolation wird Abfallmaterial verwendet und die Kosten können somit extrem tief gehalten werden.

- Ebenso ist der Produktionsprozess sehr einfach, was wiederum die Kosten senkt.

Die Herstellung eines Elements, das aus einem flächigen Element 1 und einem flächigen Deckelement 14 besteht, kann folgendermaßen erfolgen, wobei auf die Fig. 24 verwiesen wird. In dem beschriebenen Ausführungsbeispiel werden geschlossene Zellen hergestellt, die innen mit einer metallischen Beschichtung versehen sind.

Der zwei gegenläufig rotierende Rotationstiefziehrollen 23 und 24 aufweisenden Tiefziehvorrichtung werden einerseits das flächige Element 1, insbesondere eine Polymerfolie, und andererseits das flächige Deckelement 14, insbesondere eine Polymerfolie, zugeführt. Die Polymerfolien 1 und 14 tragen an der Oberseite eine metallische Beschichtung 21. Die Beschichtung 21 kann in den prospektiven Verbindungsbereichen 12 und 13 unterbrochen sein. Die Unterbrechung kann durch das Entfernen einer vollflächigen Beschichtung mittels Laser oder mechanisch erfolgen oder es kann die Beschichtung nicht flächig aufgebracht werden. Die Verbindung des Deckelements 14 mit den Verbindungsbereichen 12 und 13 des flächigen Elements 1 kann hierbei mittels Schweißen, insbesondere Ultraschallschweißen erfolgen. Alternativ ist die Beschichtung 21 ohne Unterbrechungen vorgesehen und es wird in den prospektiven Verbindungsbereichen 12 und 13 ein Kleber aufgebracht.

Die Polymerfolien 1 und 14 werden jeweils mit Hilfe eines Wärmestrahlers 22 von der Unterseite her, auf welcher keine metallische Beschichtung angeordnet ist, erwärmt, um die Polymerfolie auf die erforderliche Temperatur für den Tiefziehvorgang zu bringen (je nach Material zwischen 70 und 180°C).

Im Bereich des Spaltes zwischen den beiden Rotationstiefziehrollen 23 und 24 ist eine Gasdüse 25 angeordnet, aus welcher ein Gas mit einer geringen Wärmeleitfähigkeit in Richtung des Spaltes eingeblasen wird (z.B. Agron, $CO_2$, Krypton oder Mischungen davon), bevor die Zellen verschlossen werden. Dabei wird bevorzugt leicht mehr Gas eingeblasen als in den Zellen Platz findet, wodurch einerseits ein leichter Überdruck entsteht und andererseits eine leichte Rückströmung entsteht, die das Eindringen von Luft verhindert. Es kann alternativ auch im Unterdruck Gas eingeblasen werden, jedoch muss dann im Bereich 26 eine mechanische Abdichtung vorgesehen werden.

Mit Hilfe der Rotationstiefziehrollen 23 und 24 werden die Polymerfolien 1 und 14 jeweils im Bereich 27 mittels eines Unterdrucks in die gewünschte Form gezogen. Die Rotationstiefziehrollen 23 und 24 weisen hierzu Vertiefungen auf, die den zu verwirklichenden Vertiefungen 2 bzw. 20 entsprechen. Im Bereich 28 werden beide Polymerfolien 1 und 14 miteinander verschweißt, und zwar in den Verbindungsbereichen 12 und 13, die ohne Beschichtung 21 ausgebildet sind, oder miteinander verklebt. Dadurch entstehen geschlossene gasgefüllte Zellen, auf deren Zellwandinnenseite sich die Beschichtung 21 befindet.

Das Halbfabrikat bestehend aus den zwei Polymerfolien 1 und 14 wird auf die gewünschte Paneelgröße zugeschnitten, insbesondere mechanisch oder mittels Laser.

Danach können die Halbfabrikate gestapelt werden und untereinander zu einem erfindungsgemäßen Isolationselement verklebt oder verschweißt werden.

In den Fig. 25-28 sind alternative Herstellungsverfahren dargestellt, bei denen die Folien 1 und 14 mittels eines Extrusionsverfahrens hergestellt werden. Die Extrusion hat im Vergleich zum Tiefziehen den Vorteil, dass direkt aus einem Granulat aus PET, PE oder PP oder einem anderen Kunststoff eine Folie extrudiert wird, welche danach geformt und im halbfesten Zustand mit einer dünnen beschichteten Folie entweder laminiert oder verbunden würde. Dieses Verfahren benötigt weniger Energie als das Tiefziehen und der Schritt der Folienherstellung kann direkt integriert werden.

Bei dem Verfahren gemäß Fig. 25 wird Kunststoffgranulat 37 mittels eines Extruders erhitzt und zu einer Folie 38 extrudiert. Die noch nicht ausgekühlte Folie 38 wird mittels einer Profilrolle 39 in die Zellenform gebracht. Auf die geformte Folie 38 wird eine flache metallisch beschichtete Folie 40 laminiert, indem die Folie 40 mit Hilfe einer Gegenrolle 41 gegen die Profilrolle 39 gedrückt wird, wodurch die Zellen geschlossen werden. Vor dem Laminieren werden die Zellen zwischen der geformten Folie 38 und der flachen metallisch beschichteten Folie 40 mit einem über eine Düse 42 zugeführtem Gas befüllt. Bei dieser Variante ist die flache Seite der Zelle metallisch beschichtet.

Bei dem Verfahren gemäß Fig. 26 wird Kunststoffgranulat 37 mittels eines Extruders erhitzt und zu einer Folie 38 extrudiert. Die noch nicht ausgekühlte Folie 38 wird mit einer Folie 40 metallisch laminiert. Die noch nicht ausgekühlte, metallisch laminierte Folie 38 wird mittels einer Profilrolle 39 in die Zellenform gebracht. Auf die geformte Folie 38 wird eine noch nicht ausgekühlte, aus einem Kunststoffgranulat 43 extrudierte Folie 44 laminiert, indem die Folie 44 mit Hilfe einer Gegenrolle 41 gegen die Profilrolle 39 gedrückt wird, wodurch die Zellen geschlossen werden. Vor dem Laminieren werden die Zellen zwischen der geformten Folie 38 und der flachen Folie 44 mit einem über eine Düse 42 zugeführtem Gas befüllt. Bei dieser Variante ist die geformte Seite der Zelle metallisch beschichtet, wodurch ein leicht besserer thermischer Dämmwert erzielt wird als bei der Ausbildung gemäß Fig. 25.

Das Verfahren gemäß Fig. 27 entspricht im Wesentlichen dem Verfahren gemäß Fig. 25 mit dem Unterschied, dass beim Zusammenfügen der Folie 38 und der metallisch beschichteten Folie 40 zusätzlich eine weitere Folie 45 über die als Profilrolle 41 ausgeführte Gegenrolle zugeführt wird, sodass in einem Schritt spiegelbildlich ausgebildete Zellen hergestellt werden, die durch die metallisch beschichtete Folie 40 voneinander getrennt sind. Die weitere Folie 45 wird aus einem Kunststoffgranulat 46 extrudiert.

Das Verfahren gemäß Fig. 28 ist eine Weiterbildung des Verfahrens gemäß Fig. 27, wobei die metallisch beschichtete Folie 40 vor der Zuführung zu den Rollen 39 und 41 mittels einer Perforiereinrichtung 47 perforiert wird, um die Haftung zwischen den Folien 38 und 45 zu verbessern.

**Patentansprüche**

1. Paneelartiges Isolationselement zur thermischen Isolation von Räumen umfassend eine Mehrzahl von geschlossenen Zellen, wobei eine erste Gruppe von geschlossenen Zellen von ersten Vertiefungen (2) in einem ersten flächigen Element (1) gebildet ist und das erste flächige Element (1) zwischen den Rändern (32) der Öffnungen (3) benachbarter Vertiefungen (2) erste Verbindungsbereiche (12,13) ausbildet, mit welchen ein erstes, die Öffnungen (3) einer Vielzahl von ersten Vertiefungen (2) verschließendes flächiges Deckelement (14) an einer Vorderseite des ersten flächigen Elements (1) stoffschlüssig verbunden ist, **dadurch gekennzeichnet, dass** eine zweite Gruppe von geschlossenen Zellen vorgesehen ist, die von zweiten Vertiefungen (2') in einem zweiten flächigen Element (1') gebildet sind und das zweite flächige Element (1') zwischen den Rändern (32') der Öffnungen (3') benachbarter Vertiefungen (2') zweite Verbindungsbereiche (12',13') ausbildet, mit welchen ein zweites, die Öffnungen (3') einer Vielzahl von zweiten Vertiefungen (2') verschließendes flächiges Deckelement (14') an einer Vorderseite des zweiten flächigen Elements (1') stoffschlüssig verbunden ist, wobei die zweiten Vertiefungen (2') an einer Rückseite des ersten flächigen Elements (1) zwischen den ersten Vertiefungen (2) angeordnet sind, und die ersten Vertiefungen (2) an einer Rückseite des zweiten flächigen Elements (1') zwischen den zweiten Vertiefungen (2') angeordnet sind, sodass das zwischen dem ersten und dem zweiten flächigen Element (1,1') von ersten und zweiten Vertiefungen (2,2') freibleibende Volumen weniger als 50%, bevorzugt weniger als 40%, bevorzugt weniger als 30%, bevorzugt weniger als 20%, bevorzugt weniger als 10%, insbesondere weniger als 5%, des Volumens beträgt, das die ersten und zweiten Vertiefungen (2,2') zusammen einschließen, wobei die Verbindungsbereiche (12,12',13,13') streifenartig ausgebildet sind und ein Gitter aus quer, insbesondere in einem Winkel von 90°, zueinander verlaufenden streifenartigen Verbindungsbereichen (12,12',13,13') vorgesehen ist und die Grundfläche der ersten und/oder zweiten Vertiefungen (2,2') kreuzförmig ausgebildet ist und die ersten Vertiefungen (2) so angeordnet sind, dass die kreuzförmige Grundfläche mit ihrem Schnittpunkt am Schnittpunkt von zwei streifenartigen Verbindungsbereichen (12,12',13,13') aufliegt.

2.  Paneelartiges Isolationselement nach Anspruch 1, **dadurch gekennzeichnet, dass** die zweiten Vertiefungen (2') jeweils eine Grundfläche, eine Öffnung (3') und die Grundfläche mit dem Rand (32') der Öffnung (3') verbindende Wände aufweisen, wobei die zweiten Vertiefungen (2') so an einer Rückseite des ersten flächigen Elements (1) angeordnet sind, dass die Grundflächen der zweiten Vertiefungen (2') in den ersten Verbindungsbereichen (12,13) an diesen anliegen.

3.  Paneelartiges Isolationselement nach Anspruch 2, **dadurch gekennzeichnet, dass** die Summe der Grundflächen der zweiten Vertiefungen (2') mindestens 70%, bevorzugt mindestens 80%, bevorzugt mindestens 90%, insbesondere mindestens 95%, der Summe der Flächen der ersten Verbindungsbereiche (12,13) entspricht.

4.  Paneelartiges Isolationselement nach Anspruch 1, 2 oder 3, **dadurch gekennzeichnet, dass** die ersten Vertiefungen (2) jeweils eine Grundfläche, eine Öffnung (3) und die Grundfläche mit dem Rand (32) der Öffnung (3) verbindende Wände aufweisen, wobei die ersten Vertiefungen (2) so an einer Rückseite des zweiten flächigen Elements (1') angeordnet sind, dass die Grundflächen der ersten Vertiefungen (2) in den zweiten Verbindungsbereichen (12',13') an diesen anliegen.

5.  Paneelartiges Isolationselement nach Anspruch 4, **dadurch gekennzeichnet, dass** die Summe der Grundflächen der ersten Vertiefungen (2) mindestens 70%, bevorzugt mindestens 80%, bevorzugt mindestens 90%, insbesondere mindestens 95%, der Summe der Flächen der zweiten Verbindungsbereiche (12',13') entspricht.

6.  Paneelartiges Isolationselement nach einem der Ansprüche 1 bis 5, **dadurch gekennzeichnet, dass** die ersten Verbindungsbereiche (12,13) von der gesamten, von ersten Vertiefungen (2) freien Fläche des ersten flächigen Elements (1) gebildet sind und/oder dass die zweiten Verbindungsbereiche (12',13') von der gesamten, von zweiten Vertiefungen (2') freien Fläche des zweiten flächigen Elements (1') gebildet sind.

7.  Paneelartiges Isolationselement nach Anspruch 4, 5 oder 6, **dadurch gekennzeichnet, dass** die Wände der ersten Vertiefungen (2) und die Wände der zweiten Vertiefungen (2') parallel zueinander angeordnet sind oder flächig aneinander liegen.

8.  Paneelartiges Isolationselement nach einem der Ansprüche 1 bis 7, **dadurch gekennzeichnet, dass** das erste und das zweite flächige Deckelement (14,14') parallel zueinander verlaufen und insbesondere ebenflächig ausgebildet sind.

9.  Paneelartiges Isolationselement nach einem der Ansprüche 1 bis 8, **dadurch gekennzeichnet, dass** die ersten und/oder zweiten Vertiefungen (2,2') in einem Raster bestehend aus einer Mehrzahl von Reihen und Spalten von Vertiefungen (2,2') angeordnet sind, wobei die Reihen und Spalten quer zueinander, insbesondere in einem Winkel von 90°, verlaufen.

10. Paneelartiges Isolationselement nach einem der Ansprüche 1 bis 9, **dadurch gekennzeichnet, dass** die Öffnungen (3,3') der ersten und/oder zweiten Vertiefungen (2,2') rechteckig, insbesondere quadratisch ausgebildet sind.

11. Paneelartiges Isolationselement nach Anspruch 1, **dadurch gekennzeichnet, dass** die Wände der ersten und/oder zweiten Vertiefungen (2,2') von der kreuzförmigen Grundfläche ausgehend schräg jeweils zum nähesten Rand (32,32') verlaufen.

12. Paneelartiges Isolationselement nach einem der Ansprüche 1 bis 11, **dadurch gekennzeichnet, dass** die ersten und die zweiten Vertiefungen (2,2') die gleiche dreidimensionale Gestalt aufweisen.

13. Paneelartiges Isolationselement nach einem der Ansprüche 1 bis 12, **dadurch gekennzeichnet, dass** die Rückseite einer Mehrzahl von ersten Vertiefungen (2) eine Negativform für wenigstens eine zweite Vertiefung (2') darstellt.

14. Paneelartiges Isolationselement nach einem der Ansprüche 1 bis 13, **dadurch gekennzeichnet, dass** die Zellen mit einem Gas, vorzugsweise einem solchen mit einem Wärmeleitkoeffizienten von < 0,026W/mK, bevorzugt < 0,017W/mK, bevorzugt < 0,009W/mK, bevorzugt < 0,0055W/mK, wie z.B. Stickstoff oder ein Edelgas, insbesondere Argon, Xenon, Krypton oder Mischungen hiervon, gefüllt sind.

15. Paneelartiges Isolationselement nach einem der Ansprüche 1 bis 14, **dadurch gekennzeichnet, dass** das erste und/oder zweite flächige Element (1,1') sowie ggf. das erste und/oder zweite flächige Deckelement (14,14') von einer Polymerfolie gebildet ist, vorzugsweise aus Polyethylen, Polyethylenterephthalat, Polystyrol oder PVC, wobei die Folie bevorzugt eine Dicke von 0,01mm bis 1mm aufweist.

16. Paneelartiges Isolationselement nach einem der Ansprüche 1 bis 15, **dadurch gekennzeichnet, dass** das erste und/oder zweite flächige Element (1,1') sowie ggf. das erste und/oder zweite flächige Deckelement (14,14') auf wenigstens einer Seite eine Beschichtung (21) aufweist, bevorzugt eine metallische, insbesondere gasdichte Beschichtung (21), vorzugsweise eine Beschichtung (21) mit einem Emissionsgrad von < 0,5, vorzugsweise < 0,2, besonders bevorzugt < 0,04, wie z.B. eine Beschichtung aus Aluminium.

17. Paneelartiges Isolationselement nach Anspruch 16, **dadurch gekennzeichnet, dass** die Beschichtung (21) an der Innenseite der Zellen angeordnet ist.

18. Paneelartiges Isolationselement nach Anspruch 16 oder 17, **dadurch gekennzeichnet, dass** die Beschichtung (21) eine Schichtdicke von < 80 nm, vorzugsweise < 50 nm, aufweist.

19. Paneelartiges Isolationselement nach einem der Ansprüche 1 bis 18, **dadurch gekennzeichnet, dass** das erste und/oder zweite flächige Deckelement (14,14') eine Vielzahl von dritten bzw. vierten Vertiefungen aufweist, die zu den ersten bzw. zweiten Vertiefungen (2,2') spiegelbildlich ausgestaltet sind, wobei das erste bzw. zweite flächige Deckelement (14,14') zwischen den Rändern (3,3') der Öffnungen (3) benachbarter dritter bzw. vierter Vertiefungen dritte bzw. vierte Verbindungsbereiche ausbildet und die ersten und dritten bzw. die zweiten und vierten Verbindungsbereiche miteinander stoffschlüssig verbunden sind.

20. Paneelartiges Isolationselement nach einem der Ansprüche 1 bis 19, **dadurch gekennzeichnet, dass** die ersten und/oder zweiten Vertiefungen (2,2') sowie ggf. die dritten und/oder vierten Vertiefungen aus dem jeweiligen flächigen Element (1,1') bzw. aus dem jeweiligen flächigen Deckelement (14,14') durch Tiefziehen erhalten sind.

21. Verfahren zur Herstellung eines Isolationselements nach einem der Ansprüche 1 bis 20, bei welchem ein als Polymerfolie ausgebildetes flächiges Element (1,1') erwärmt wird, zur Ausbildung von Vertiefungen (2,2') tiefgezogen wird und die Vertiefungen (2,2') zur Ausbildung von geschlossenen Zellen mittels eines als Polymerfolie ausgebildeten flächigen Deckelements (14,14') verschlossen werden, **dadurch gekennzeichnet, dass** das flächige Element (1,1') über eine erste Rolle (23) geführt wird, welche Negativformen der Vertiefungen (2,2') aufweist, um die Vertiefungen (2,2') mittels Unterdrucks tiefzuziehen, dass das flächige Deckelement (14) über eine zweite Rolle (24) geführt wird, deren Achse parallel zur Drehachse der ersten Rolle verläuft, sodass das tiefgezogene flächige Element (1,1') und das flächige Deckelement (14) im Spalt zwischen der ersten und der zweiten Rollen (23,24) aneinander gedrückt und stoffschlüssig miteinander verbunden werden.

22. Verfahren nach Anspruch 21, **dadurch gekennzeichnet, dass** die stoffschlüssige Verbindung des tiefgezogenen flächigen Elements (1,1') mit dem flächigen Deckelement (14,14') durch Kleben oder Verschweißen, insbesondere Ultraschallschweißen, erfolgt.

23. Verfahren nach Anspruch 21 oder 22, **dadurch gekennzeichnet, dass** dem Spalt zwischen der ersten und der zweiten Rolle (23,24) ein Gas zugeführt wird, welches in die Vertiefungen (2,2') geleitet wird, bevor die Vertiefungen (2,2') verschlossen werden.

24. Verfahren nach Anspruch 21, 22 oder 23, **dadurch gekennzeichnet, dass** das flächige Deckelement (14,14') erwärmt wird und zur Ausbildung von Vertiefungen (2,2') über die zweite Rolle (24) geführt wird, die Negativformen der Vertiefungen (2,2') aufweist.

25. Verfahren nach einem der Ansprüche 21 bis 24, **dadurch gekennzeichnet, dass** das flächige Element (1,1') und/oder das flächige Deckelement (14,14') eine Beschichtung (21) aufweist und das flächige Element (1,1') und das flächige Deckelement (14,14') so zur ersten bzw. zweiten Rolle (23,24) zugeführt werden, dass die Beschichtung (21) an der dem anderen Element zugewandten Seite angeordnet ist.

## Claims

1. A panel-shaped insulating element for thermally insulating spaces, comprising a plurality of closed cells, wherein a first group of closed cells is formed by first recesses (2) in a first flat element (1), and the first flat element (1) between the edges (32) of the openings (3) of adjacent recesses (2) forms first connection regions (12,13) to which a first flat cover element (14) closing the openings (3) of a plurality of first recesses (2) is materially bonded on a front side of the first flat element (1), **characterized in that** a second group of closed cells is provided, which is formed by second recesses (2') in a second flat element (1'), and the second flat element (1') between the edges (32') of the openings (3') of adjacent recesses (2') forms second connection regions (12',13') to which a second flat cover element (14') closing the openings (3') of a plurality of second recesses (2') is materially bonded on a front side of the second flat element (1'), wherein the second recesses (2') are provided on a rear side of the first flat element (1) between the first recesses (2), and the first recesses (2) are provided on a rear side of the second flat element (1') between the second recesses (2'), so that the volume remaining free of first and second recesses (2,2') between the first and second flat elements (1,1') is less than 50%, preferably less than 40%, preferably less than 30%, preferably less than 20%, preferably less than 10%, in particular less than 5%, of the volume enclosed by the first and second recesses (2,2') together, wherein the connecting regions (12,12',13,13') are strip-shaped, forming a grid of strip-shaped connecting regions (12,12',13,13') extending transversely, in particular at an angle of 90°, relative to one another, and the bases of the first and/or second recesses (2,2') are cross-shaped and the first recesses (2) are arranged such that the cross-shaped base, by its point of intersection, rests on the point of intersection of two strip-shaped connecting regions (12,12',13,13') .

2. A panel-shaped insulating element according to claim 1, **characterized in that** the second recesses (2') each comprise a base, an opening (3') and walls connecting the base to the edge (32') of the opening (3'), wherein the second recesses (2') are disposed on a rear side of the first flat element (1) in such a manner that the bases of the second recesses (2') in the first connecting regions (12,13) contact the same.

3. A panel-shaped insulating element according to claim 2, **characterized in that** the sum of the bases of the second recesses (2') corresponds to at least 70%, preferably at least 80%, preferably at least 90%, in particular at least 95%, of the sum of the surface areas of the first connecting regions (12,13).

4. A panel-shaped insulating element according to claim 1, 2 or 3, **characterized in that** the first recesses (2) each comprise a base, an opening (3) and walls connecting the base to the edge (32) of the opening (3), wherein the first recesses (2) are disposed on a rear side of the second flat element (1') in such a manner that the bases of the first recesses (2) in the second connecting regions (12',13') contact the same.

5. A panel-shaped insulating element according to claim 4, **characterized in that** the sum of the bases of the first recesses (2) corresponds to at least 70%, preferably at least 80%, preferably at least 90%, in particular at least 95%, of the sum of the surface areas of the second connecting regions (12',13').

6. A panel-shaped insulating element according to any one of claims 1 to 5, **characterized in that** the first connecting regions (12,13) are formed by the total surface area free of first recesses (2), of the first flat element (1), and/or the second connecting regions (12',13') are formed by the total surface area free of second recesses (2'), of the second flat element (1').

7. A panel-shaped insulating element according to claim 4, 5 or 6, **characterized in that** the walls of the first recesses (2) and the walls of the second recesses (2') are arranged in parallel or lie in planar abutment with each other.

8. A panel-shaped insulating element according to any one of claims 1 to 7, **characterized in that** the first and second flat cover elements (14,14') extend in parallel with each other and, in particular, are planarly designed.

9. A panel-shaped insulating element according to any one of claims 1 to 8, **characterized in that** the first and/or second recesses (2,2') are arranged in a raster comprising a plurality of rows and columns of recesses (2,2'), the rows and columns extending transversely to one another, in particular at an angle of 90°.

10. A panel-shaped insulating element according to any one of claims 1 to 9, **characterized in that** the openings (3,3') of the first and/or second recesses (2,2') are designed to be rectangular, in particular square.

11. A panel-shaped insulating element according to claim 1, **characterized in that** the walls of the first and/or second recesses (2,2') each obliquely extend to the nearest edge (32,32'), starting from the cross-shaped base.

12. A panel-shaped insulating element according to any one of claims 1 to 11, **characterized in that** the first and the second recesses (2,2') have the same three-dimensional shape.

13. A panel-shaped insulating element according to any one of claims 1 to 12, **characterized in that** the rear side of a plurality of first recesses (2) represents a negative form for at least a second recess (2').

14. A panel-shaped insulating element according to any one of claims 1 to 13, **characterized in that** the cells are filled with a gas, preferably a gas having a thermal conductivity coefficient of <0.026W/mK, preferably <0.17W/mK, preferably <0.009W/mK, preferably <0.0055W/mK, such as nitrogen or a noble gas, in particular argon, xenon, krypton or mixtures thereof.

15. A panel-shaped insulating element according to any one of claims 1 to 14, **characterized in that** the first and/or the second flat element (1,1'), and optionally the first and/or the second flat cover element (14,14'), are formed by a polymer film, preferably of polyethylene, polyethylene terephthalate, polystyrene or PVC, said film preferably having a thickness of 0.01mm to 1mm.

16. A panel-shaped insulating element according to any one of claims 1 to 15, **characterized in that** the first and/or the second flat element (1,1'), and optionally the first and/or the second flat cover element (14,14'), on at least one side comprises a coating (21), preferably a metallic and, in particular, gas-tight coating (21), preferably a coating (21) with an emissivity of <0.5, preferably <0.2, particularly preferably <0.04, such as a coating of aluminum.

17. A panel-shaped insulating element according to claim 16, **characterized in that** the coating (21) is applied on the inner sides of the cells.

18. A panel-shaped insulating element according to claim 16 or 17, **characterized in that** the coating (21) has a layer thickness of <80nm, preferably <50nm.

19. A panel-shaped insulating element according to any one of claims 1 to 18, **characterized in that** the first and/or the second flat cover element (14,14') comprises a plurality of third and fourth recesses, respectively, which are designed to be mirror-inverted relative to the first and second recesses (2,2'), respectively, wherein the first and/or second flat cover element (14,14') between the edges (3,3') of the openings (3) of adjacent third and/or fourth recesses forms third and/or fourth connecting regions, the first and third, and the second and fourth, connecting regions being materially bonded to each other.

20. A panel-shaped insulating element according to any one of claims 1 to 19, **characterized in that** the first and/or second recesses (2,2'), and optionally the third and/or fourth recesses, are obtained from the respective flat element (1,1') and the respective flat cover element (14,14') by deep-drawing.

21. A method for producing an insulating element according to any one of claims 1 to 20, in which a flat element (1,1') formed as a polymer film is heated, deep-drawn for forming recesses (2,2'), and the recesses (2,2') are closed by a flat cover element (14,14') formed as a polymer film for forming closed cells, **characterized in that** the flat element (1,1') is guided over a first roller (23), which comprises negative forms of the recesses (2,2') by means of negative pressure, for deep-drawing the recesses (2,2') by means of negative pressure, that the flat cover element (14) is guided over a second roller (24) whose axis extends in parallel with the axis of rotation of the first roller such that the deep-drawn flat element (1,1') and the flat cover element (14) are pressed at each other in the gap between the first and second rollers (23,24) and are materially bonded to each other.

22. A method according to claim 21, **characterized in that** material bonding of the deep-drawn flat element (1,1') to the flat cover element (14,14') is effected by gluing or welding, in particular ultrasonic welding.

23. A method according to claim 21 or 22, **characterized in that** a gas is supplied to the gap between the first and second rollers (23,24), which gas is conducted into the recesses (2,2') prior to closing the recesses (2,2').

24. A method according to claim 21, 22 or 23, **characterized in that** the flat cover element (14,14') is heated and, for forming recesses (2,2'), is guided over the second roller (24), which comprises negative forms of the recesses (2,2').

25. A method according to any one of claims 21 to 24, **characterized in that** the flat element (1,1') and/or the flat cover element (14,14') comprises a coating (21), and the flat element (1,1') and the flat cover element (14,14') are respectively supplied to the first and second rollers (23,24) in such a manner that the coating (21) is disposed on the side facing the other element.

**Revendications**

1. Élément isolant en forme de panneau destiné à l'isolation thermique de locaux, comprenant une pluralité de cellules fermées, dans lequel un premier groupe de cellules fermées est formé par des premières cavités (2) dans un premier élément plan (1) et le premier élément plan (1) forme, entre les bords (32) des ouvertures (3) de cavités (2) voisines, des premières zones de liaison (12, 13), avec lesquelles un premier élément plan formant couvercle (14) qui ferme les ouvertures (3) d'une pluralité de premières cavités (2) est relié par fusion de matières à un côté avant du premier élément plan (1), **caractérisé en ce qu'**un deuxième groupe de cellules fermées est prévu, qui est formé par des deuxièmes cavités (2') dans un deuxième élément plan(1') et le deuxième élément plan (1') forme, entre les bords (32') des ouvertures (3') de cavités (2') voisines, des deuxièmes zones de liaison (12', 13'), avec lesquelles un deuxième élément plan formant couvercle (14') qui ferme les ouvertures (3') d'une pluralité de deuxièmes cavités (2') est relié par fusion de matières à un côté avant du deuxième élément plan (1'), dans lequel les deuxièmes cavités (2') sont disposées au niveau d'un côté arrière du premier élément plan (1) entre les premières cavités (2), et les premières cavités (2) sont disposées au niveau d'un côté arrière du deuxième élément plan (1') entre les deuxièmes cavités (2'), de sorte que le volume restant entre le premier et le deuxième élément plan (1, 1') des premières et deuxièmes cavités (2, 2') est égal à moins de 50%, de préférence moins de 40%, de préférence moins de 30%, de préférence moins de 20%, de préférence moins de 10%, en particulier moins de 5%, du volume total englobé par les premières et deuxièmes cavités (2,2'), dans lequel les zones de liaison (12, 12', 13, 13') sont formés en forme de bande, et il est prévu une grille formée par zones de liaison (12, 12', 13, 13') en forme de bande qui s'étendent transversalement les uns par rapport aux autres, en particulier à un angle de 90°, et la surface de base des premières et/ou deuxièmes cavités (2, 2') est configurée en forme de croix, et les premières cavités (2) sont disposées de telle sorte que la surface de base en forme de croix repose avec son intersection à l'intersection de deux zones de liaison (12, 12', 13, 13') en forme de bande.

2. Élément isolant en forme de panneau selon !a revendication 1, **caractérisé en ce que** les deuxièmes cavités (2') comprennent chacune une surface de base, une ouverture (3') et des parois reliant la surface de base avec le bord (32') de l'ouverture (3'), dans lequel les deuxièmes cavités (2') sont disposées au niveau d'un côté arrière du premier élément plan (1) de telle manière que les surfaces de base des deuxièmes cavités (2') viennent en butée contre celui-ci dans les premières zones de liaison (12, 13).

3. Élément isolant en forme de panneau selon la revendication 2, **caractérisé en ce que** la somme des surfaces de base des deuxièmes cavités (2') correspond à au moins 70%, de préférence au moins 80%, de préférence au moins 90%, en particulier au moins 95%, de la somme des surfaces des premières zones de liaison (12, 13).

4. Élément isolant en forme de panneau selon la revendication 1, 2 ou 3, **caractérisé en ce que** les premières cavités (2) comprennent chacune une surface de base, une ouverture (3) et des parois reliant la surface de base avec le bord (32) de l'ouverture (3), dans lequel les premières cavités (2) sont disposées au niveau d'un côté arrière du deuxième élément plan (1') de telle manière que les surfaces de base des premières cavités (2) viennent en butée contre celui-ci dans les deuxièmes zones de liaison (12', 13').

5. Élément isolant en forme de panneau selon la revendication 4, **caractérisé en ce que** la somme des surfaces de base des premières cavités (2) correspond à au moins 70%, de préférence au moins 80%, de préférence au moins 90%, en particulier au moins 95%, de la somme des surfaces des deuxièmes zones de liaison (12',13').

6. Élément isolant en forme de panneau selon l'une des revendications 1 à 5, **caractérisé en ce que** les premières zones de liaison (12,13) sont formées par la totalité de la surface du premier élément plan (1) qui est exempte de premières cavités (2), et/ou **en ce que** les deuxièmes zones de liaison (12',13') sont formées par la totalité de la surface du deuxième élément plan (1') qui est exempte de deuxièmes cavités (2').

7. Élément isolant en forme de panneau selon la revendication 4, 5 ou 6, **caractérisé en ce que** les parois des premières cavités (2) et les parois des deuxièmes cavités (2') sont disposées parallèlement les uns aux autres ou sont disposées à plat les uns contre les autres.

8. Élément isolant en forme de panneau selon l'une des revendications 1 à 7, **caractérisé en ce que** les premier et deuxième éléments plans formant couvercle (14, 14') sont parallèles les uns aux autres et, en particulier, sont formés aux surfaces planes.

9. Élément isolant en forme de panneau selon l'une des revendications 1 à 8, **caractérisé en ce que** les premières et/ou deuxièmes cavités (2, 2') sont disposées dans un treillis composé d'une pluralité de lignes et de colonnes de dépressions (2, 2'), dans lequel les lignes et les colonnes s'étendent transversalement les uns par rapport aux autres, en particulier à un angle de 90°.

10. Élément isolant en forme de panneau selon l'une des revendications 1 à 9, **caractérisé en ce que** les ouvertures (3, 3') des premières et/ou des deuxièmes cavités (2, 2') sont de forme rectangulaire, en particulier carrée.

11. Élément isolant en forme de panneau selon la revendication 1, **caractérisé en ce que** les parois des premières et/ou des deuxièmes cavités (2, 2') s'étend obliquement par rapport au bord (32, 32') le plus proche à partir de la surface de base en forme de croix.

12. Élément isolant en forme de panneau selon l'une des revendications 1 à 11, **caractérisé en ce que** les premières et les deuxièmes cavités (2, 2') ont la même forme tridimensionnelle.

13. Élément isolant en forme de panneau selon l'une des revendications 1 à 12, **caractérisé en ce que** le côté arrière d'une pluralité de premières cavités (2) présente une forme négative pour au moins une deuxième dépression (2').

14. Élément isolant en forme de panneau selon l'une des revendications 1 à 13, **caractérisé en ce que** les cellules sont remplis d'un gaz, de préférence un gaz avec un coefficient de conductivité thermique de < 0,026 W/mK, de préférence < 0,017 W/mK, de préférence < 0,009 W/mK, de préférence < 0,0055 W/mK, comme par exemple l'azote ou un gaz noble, en particulier l'argon, le xénon, le krypton ou leurs mélanges.

15. Élément isolant en forme de panneau selon l'une des revendications 1 à 14, **caractérisé en ce que** le premier et/ou le deuxième élément plan (1, 1'), ainsi que, le cas échéant, le premier et/ou deuxième élément plan formant couvercle (14, 14') est formé par un film polymère, de préférence en polyéthylène, polyéthylène téréphtalate, polystyrène ou PVC, dans lequel le film de préférence a une épaisseur de 0,01 mm à 1 mm.

16. Élément isolant en forme de panneau selon l'une des revendications 1 à 15, **caractérisé en ce que** le premier et/ou le deuxième élément plan (1, 1'), ainsi que, le cas échéant, le premier et/ou deuxième élément plan formant couvercle (14, 14') est pourvu sur au moins un côté d'un revêtement (21), de préférence un revêtement (21) métallique, en particulier étanche au gaz, de préférence un revêtement (21) avec une émissivité de < 0, 5, de préférence < 0,2, de manière particulièrement préférée < 0,04, tel que, par exemple, un revêtement en aluminium.

17. Élément isolant en forme de panneau selon la revendication 16, **caractérisé en ce que** le revêtement (21) est disposé à l'intérieur des cellules.

18. Élément isolant en forme de panneau selon la revendication 16 ou 17, **caractérisé en ce que** le revêtement (21) a une épaisseur de couche de < 80 nm, de préférence < 50 nm.

19. Élément isolant en forme de panneau selon l'une des revendications 1 à 18, **caractérisé en ce que** le premier et/ou deuxième élément plan formant couvercle (14, 14') est pourvu d'une pluralité de troisièmes resp. quatrièmes dépressions, conçus en miroir par rapport aux premières resp. deuxièmes cavités (2, 2'), dans lequel le premier ou deuxième élément plan formant couvercle (14, 14'), entre les bords (3, 3') des ouvertures (3) de troisièmes resp. quatrièmes dépressions voisins, forme des troisièmes resp. quatrièmes zones de liaison, et les premières et troisièmes resp. les deuxièmes et quatrièmes zones de liaison sont reliées par fusion de matières les uns aux autres.

20. Élément isolant en forme de panneau selon l'une des revendications 1 à 19, **caractérisé en ce que** les premières et/ou deuxièmes cavités (2, 2'), ainsi que, le cas échéant, les troisièmes et/ou quatrièmes dépressions sont obtenues par emboutissage profond à partir de l'élément plan (1, 1') respectif ou à partir de l'élément plan formant couvercle (14, 14') respectif.

21. Procédé de fabrication d'élément isolant selon l'une des revendications 1 à 20, dans lequel un élément plan (1, 1') conçu comme un film polymère est réchauffé, puis est embouti pour former des dépressions (2, 2'), et les dépressions (2, 2') sont fermées au moyen d'un élément plan formant couvercle (14, 14') conçu comme un film polymère pour former des cellules fermées, **caractérisé en ce que** l'élément plan (1, 1') est guidé sur un premier rouleau (23), pourvu de formes négatives des dépressions (2, 2'), pour l'emboutissage profond des dépressions (2, 2') au moyen d'une pression négative, et **en ce que** l'élément plan formant couvercle (14) est guidé sur un deuxième rouleau (24), dont l'axe est parallèle à l'axe de rotation du premier rouleau, de sorte que l'élément plan (1, 1') embouti et l'élément plan formant couvercle (14) sont pressés l'un contre l'autre dans la fente entre le premier et le deuxième rouleau (23, 24), et sont reliées l'un à l'autre par fusion de matières.

22. Procédé selon la revendication 21, **caractérisé en ce que** l'assemblage par fusion de matières de l'élément plan (1, 1') embouti avec l'élément plan formant couvercle (14, 14') se fait par collage ou par soudage, en particulier par soudage par ultrasons.

23. Procédé selon la revendication 21 ou 22, **caractérisé en ce qu'**un gaz est introduit dans la fente entre le premier et le deuxième rouleau (23, 24), qui est guidé dans les dépressions (2, 2') avant que les dépressions (2, 2') soient fermées.

24. Procédé selon la revendication 21, 22 ou 23, **caractérisé en ce que,** pour former des dépressions (2, 2'), l'élément plan formant couvercle (14, 14') est réchauffé et est guidé sur le deuxième rouleau (24) pourvu de formes négatives des dépressions (2, 2').

25. Procédé selon l'une des revendications 21 à 24, **caractérisé en ce que** l'élément plan (1, 1') et/ou l'élément plan formant couvercle (14, 14') est pourvu d'un revêtement (21) et **en ce que** l'élément plan (1, 1') et l'élément plan formant couvercle (14, 14') sont amenés au premier resp. au deuxième rouleau (23, 24) de telle manière que le revêtement (21) est disposé au côté tourné vers l'autre élément.

Fig. 1

Fig. 2

14'

18

13'

1'

12'

12'

4

9'

8'

7'

10'

15'

6'

3'

2'

11'

5'

V

VIII

20

EP 3 682 066 B1

Fig. 3

Fig. 4

Fig. 5

Fig. 6

Fig. 7

EP 3 682 066 B1

Fig. 8

Fig. 9

Fig. 10

Fig. 11

Fig. 12

EP 3 682 066 B1

Fig. 13

Fig. 14

Fig. 15

Fig. 16

Fig. 17

EP 3 682 066 B1

Fig. 18

Fig. 19

EP 3 682 066 B1

Fig. 20

**Fig. 21**

**Fig. 22**

**Fig. 23**

Fig. 24

Fig. 25

Fig. 26

46

40

42

45

42 .

37

38

41

39

## Fig. 27

40

47

46

42

45

42 .

37

38

41

39

## Fig. 28

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011032299 A1
- WO 2012142639 A1